(19) Europäisches Patentamt / European Patent Office / Office européen des brevets

(11) **EP 4 436 218 A1**

(12) **EUROPEAN PATENT APPLICATION**
published in accordance with Art. 153(4) EPC

(43) Date of publication:
**25.09.2024 Bulletin 2024/39**

(21) Application number: **22909589.8**

(22) Date of filing: **16.11.2022**

(51) International Patent Classification (IPC):
**H04W 4/024** (2018.01)

(52) Cooperative Patent Classification (CPC):
**H04W 4/024; H04W 4/029; H04W 24/08; H04W 84/06**

(86) International application number:
**PCT/CN2022/132261**

(87) International publication number:
**WO 2023/116273 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2021 CN 202111576791**

(71) Applicant: Huawei Technologies Co., Ltd.
**Shenzhen, Guangdong 518129 (CN)**

(72) Inventors:
• **LI, Jianfeng**
  **Shenzhen, Guangdong 518129 (CN)**
• **LIU, Jianghua**
  **Shenzhen, Guangdong 518129 (CN)**
• **LIU, Mengting**
  **Shenzhen, Guangdong 518129 (CN)**
• **GAO, Xin**
  **Shenzhen, Guangdong 518129 (CN)**

(74) Representative: **Thun, Clemens**
  **Mitscherlich PartmbB**
  **Patent- und Rechtsanwälte**
  **Karlstraße 7**
  **80333 München (DE)**

(54) **POSITIONING METHOD AND APPARATUS, AND STORAGE MEDIUM AND PROGRAM PRODUCT**

(57)    This application discloses a positioning method and apparatus, a storage medium, and a program product. A first device receives at least one first satellite signal and at least one first reference signal, and sends first information and second information. A second device receives at least one second satellite signal and at least one second reference signal, and sends third information and fourth information. A server receives the first information, the second information, the third information, and the fourth information, and determines a location of the first device based on the first information, the second information, the third information, and the fourth information. In this way, the server may perform joint positioning based on phase measurement values determined by a satellite signal and a reference signal that are received by each of the first device and the second device, thereby implementing high-precision positioning solution.

FIG. 6

**Description**

This application claims priority to Chinese Patent Application No. 202111576791.9, filed with the China National Intellectual Property Administration on December 21, 2021 and entitled "POSITIONING METHOD AND APPARATUS, STORAGE MEDIUM, AND PROGRAM PRODUCT", which is incorporated herein by reference in its entirety.

**TECHNICAL FIELD**

This application relates to the field of communication technologies, and in particular, to a positioning method and apparatus, a storage medium, and a program product.

**BACKGROUND**

Positioning solution can be performed based on a global navigation satellite system (global navigation satellite system, GNSS) carrier phase positioning technology. This technology depends on a quantity of received satellite signals, and a sufficient quantity of satellite signals need to be received to implement high-precision positioning solution. However, in a dense environment such as a viaduct or a high-rise building, a satellite signal coverage gap may exist due to obstructions or the like, and a receiver may be unable to implement high-precision positioning.

**SUMMARY**

This application provides a positioning method and apparatus, a storage medium, and a program product, to perform positioning by jointly using at least one satellite signal and at least one reference signal that are received by each of a first device and a second device, thereby implementing high-precision positioning.

According to a first aspect, a positioning method is provided. The method includes: A first device/a second device receives at least one satellite signal and at least one reference signal. The first device/the second device sends first information and second information. The first information is a phase measurement value determined based on the at least one satellite signal, and the second information is a phase measurement value determined based on the at least one reference signal. In this aspect, the first device/the second device sends, to the server, the phase measurement values respectively determined based on the at least one satellite signal and the at least one reference signal that are received by the first device/the second device, so that the server can perform joint positioning based on the phase measurement values determined based on the satellite signal and the reference signal that are received by each of the first device and the second device, thereby implementing high-precision positioning solution.

The server may be a core network device, a positioning server, a component of a network device, or the like.

In a possible implementation, the second device has a largest total quantity of communicable satellites and access network devices in common with the first device, or the second device has a total quantity of communicable satellites and access network devices in common with the first device exceeding a first threshold. The second device may be a terminal or an access network device, and the second device may alternatively be referred to as a positioning reference unit (positioning reference unit, PRU). In this implementation, there is a high probability that the second device may receive the at least one satellite signal and the at least one reference signal, thereby helping the server perform joint positioning.

In another possible implementation, the at least one satellite signal and the at least one reference signal are used for positioning.

In still another possible implementation, the first information includes at least one of the following information: a phase measurement value of each of the at least one satellite signal, a difference between phase measurement values of two of the at least one satellite signal, and a difference between phase measurement values of any one of the at least one satellite signal at two or more moments. The second information includes at least one of the following information: a phase measurement value of each of the at least one reference signal, a difference between phase measurement values of two of the at least one reference signal, and a difference between phase measurement values of any one of the at least one reference signal at two or more moments. In this implementation, the first information and the second information are represented in various forms. The first information includes the phase measurement value of each of the at least one satellite signal, or the second information includes the phase measurement value of each of the at least one reference signal. In this way, the server may obtain these phase measurement values after receiving the first information. The first information includes the difference between phase measurement values of two of the at least one satellite signal, or the second information includes the difference between phase measurement values of two of the at least one reference signal. In this way, signaling overheads can be reduced, and the server may directly use these differences to perform high-precision positioning solution. The first information includes the difference between phase measurement values of any one of the at least one satellite signal at two or more moments, or the second information includes a difference between phase measurement values of any one of the at least one reference signal at two or more moments. In this way, the server can obtain an accumulated phase measurement value of the satellite signal/the reference signal, and a location of the first device can be more accurately determined based on the accumulated phase measurement value.

In still another possible implementation, the method further includes: The first device/the second device sends a first measurement frequency and/or a second measurement frequency. The first measurement frequency is a frequency of the at least one satellite signal, and the second measurement frequency is a frequency of the at least one reference signal. In this implementation, the first device/the second device may report the frequency of the at least one satellite signal and/or the frequency of the at least one reference signal. The first measurement frequency may include one or more frequency values, and the second measurement frequency may include one or more frequency values.

In still another possible implementation, the method further includes: The first device/the second device receives first configuration information and/or second configuration information. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information. In this implementation, the server may configure the reporting period of the first information/the second information and the reporting delay of the first information/the second information. In the foregoing implementation, if the first device/the second device does not send the first measurement frequency and/or the second measurement frequency, the server may further configure the first measurement frequency and/or the second measurement frequency. By receiving the first configuration information and/or the second configuration information, the first device/the second device can send the first information/the second information in an accurate and timely manner.

In still another possible implementation, before the first device/the second device sends the first information and the second information, the method further includes: The first device/the second device receives a first measurement request and/or a second measurement request. The first measurement request is used to request to measure a phase of the at least one received satellite signal. The second measurement request is used to request to measure a phase of the at least one received reference signal. In this implementation, after receiving the measurement request from the server, the first device/the second device may measure the phase of the at least one received satellite signal/at least one received reference signal.

In still another possible implementation, that the first device/the second device sends first information and second information includes: The first device/the second device sends a positioning protocol message, where the positioning protocol message includes the first information and the second information. The positioning protocol message is a communication protocol message between the first device/the second device and the server, and may be a new radio positioning protocol annex (new radio positioning protocol annex, NRPPa) message or a long term evolution positioning protocol (long term evolution positioning protocol, LPP) message. In this implementation, the first device is a terminal, and may send the first information and the second information to the server by using the LPP message. The second device may be a terminal or a base station. When the second device is a terminal, the second device may send the first information and the second information to the server by using the LPP message. When the second device is a base station, the second device may send the first information and the second information to the server by using the NRPPa message.

According to a second aspect, a positioning method is provided. The method includes: A server receives first information, second information, third information, and fourth information. The server determines a location of a first device based on the first information, the second information, the third information, and the fourth information. The first information is a phase measurement value determined by the first device based on at least one first satellite signal, the second information is a phase measurement value determined by the first device based on at least one first reference signal, the third information is a phase measurement value determined by a second device based on at least one second satellite signal, and the fourth information is a phase measurement value determined by the second device based on at least one second reference signal. In this aspect, the server receives the phase measurement values determined by the first device/the second device respectively based on the at least one satellite signal and the at least one reference signal that are received by the first device/the second device, and performs joint positioning based on the phase measurement values determined based on the satellite signal and the reference signal that are received by each of the first device and the second device, thereby implementing high-precision positioning solution.

In a possible implementation, before the server receives the third information and the fourth information, the method further includes: The server determines the second device. In this implementation, the second device has a largest total quantity of communicable satellites and access network devices in common with the first device, or the second device has a total quantity of communicable satellites and access network devices in common with the first device exceeding a first threshold. The second device may be a terminal or an access network device, and the second device may alternatively be referred to as a PRU. The second device may receive at least one satellite signal and at least one reference signal, thereby facilitating joint positioning of the server.

In another possible implementation, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

In still another possible implementation, the method further includes: The server receives a first measurement frequency, a second measurement frequency, a third measurement frequency, and/or a fourth measurement frequency. The first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

In still another possible implementation, the method further includes: The server sends first configuration information and/or second configuration information to the first device. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

In still another possible implementation, the method further includes: The server sends third configuration information and/or fourth configuration information to the second device. The third configuration information includes at least one of the following information: the third measurement frequency, a reporting period of the third information, and a reporting delay of the third information. The fourth configuration information includes at least one of the following information: the fourth measurement frequency, a reporting period of the fourth information, and a reporting delay of the fourth information.

In still another possible implementation, the method further includes: The server sends a first measurement request and/or a second measurement request to the first device. The first measurement request is used to request to measure a phase of the at least one received first satellite signal. The second measurement request is used to request to measure a phase of the at least one received first reference signal.

In still another possible implementation, the method further includes: The server sends a third measurement request and/or a fourth measurement request to the second device. The third measurement request is used to request to measure a phase of the at least one received second satellite signal. The fourth measurement request is used to request to measure a phase of the at least one received second reference signal.

In still another possible implementation, that a server receives third information and fourth information includes: The server receives a positioning protocol message, where the positioning protocol message includes the first information and the second information. The positioning protocol message is a communication protocol message between the first device/the second device and the server, and may be a new radio positioning protocol annex NRPPa message or a long term evolution positioning protocol LPP message.

According to a third aspect, a positioning method is provided. The method includes: A first device receives at least one first satellite signal and at least one first reference signal. The first device receives third information and fourth information. The third information is a phase measurement value determined by a second device based on at least one second satellite signal, and the fourth information is a phase measurement value determined by the second device based on at least one second reference signal. The first device determines a location of the first device based on first information, second information, the third information, and the fourth information. The first information is a phase measurement value determined by the first device based on the at least one first satellite signal, and the second information is a phase measurement value determined by the first device based on the at least one first reference signal. In this aspect, the first device may perform j oint positioning based on the phase measurement values respectively determined based on the at least one first satellite signal and the at least one first reference signal that are received by the first device and the phase measurement values respectively determined based on the at least one second satellite signal and the at least one second reference signal that are received by the second device, to determine the location of the first device, thereby implementing high-precision positioning solution.

In a possible implementation, before the first device receives the at least one first satellite signal and the at least one first reference signal, the method further includes: The first device sends a positioning request to a server.

In another possible implementation, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

In still another possible implementation, the method further includes: The first device sends a first measurement frequency and/or a second measurement frequency. The first measurement frequency is a frequency of the at least one first satellite signal, and the second measurement frequency is a frequency of the at least one first reference signal.

In still another possible implementation, the method further includes: The first device receives first configuration information and/or second configuration information. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

In still another possible implementation, before the first device receives the at least one first satellite signal and the at least one first reference signal, the method further includes: The first device receives a first measurement request and/or a second measurement request. The first measurement request is used to request to measure a phase of the at least one received first satellite signal. The second measurement request is used to request to measure a phase of the at least one received first reference signal.

In still another possible implementation, that the first device receives third information and fourth information includes: The first device receives a radio resource control message, where the radio resource control (radio resource control, RRC) message includes the third information and the fourth information. Alternatively, the first device receives a long term evolution new radio positioning protocol annex NRPPa message, where the NRPPa message includes the third information and the fourth information. Alternatively, the first device receives a sidelink message, where the sidelink message includes the third information and the fourth information.

According to a fourth aspect, a positioning method is provided. The method includes: A first device/a second device receives at least one satellite signal. The first device/the second device sends at least one reference signal. The first device/the second device sends first information, where the first information is a phase measurement value determined based on the at least one satellite signal. In this aspect, the first device/the second device sends, to the server, the phase measurement value determined based on the at least one received satellite signal, and sends the at least one reference signal to the access network device, so that the access network device sends the phase measurement value determined based on the at least one received reference signal to the server. In this way, the server can perform joint positioning based on these phase measurement values, thereby implementing high-precision positioning solution.

In a possible implementation, the at least one satellite signal and the at least one reference signal are used for positioning.

In another possible implementation, the first information includes at least one of the following information: a phase measurement value of each of the at least one satellite signal, a difference between phase measurement values of two of the at least one satellite signal, and a difference between phase measurement values of any one of the at least one satellite signal at two or more moments.

In still another possible implementation, the method further includes: The first device/the second device sends a first measurement frequency and/or a second measurement frequency. The first measurement frequency is a frequency of the at least one satellite signal, and the second measurement frequency is a frequency of the at least one reference signal.

In still another possible implementation, the method further includes: The first device/the second device receives configuration information. The configuration information includes at least one of the following information: the first measurement frequency, the second measurement frequency, a reporting period of the first information, and a reporting delay of the first information.

In still another possible implementation, the method further includes: The first device/the second device receives a measurement request and/or a sending request. The measurement request is used to request to measure a phase of the at least one received satellite signal. The sending request is used to request to send the at least one reference signal.

In still another possible implementation, the method further includes: The first device/the second device sends a positioning protocol message, where the positioning protocol message includes the first information. The positioning protocol message is a communication protocol message between the first device/the second device and the server, and may be a new radio positioning protocol annex NRPPa message or a long term evolution positioning protocol LPP message.

According to a fifth aspect, a positioning method is provided. The method includes: A server receives first information sent by a first device, second information and fourth information sent by an access network device, and third information sent by a second device. The server determines a location of the first device based on the first information, the second information, the third information, and the fourth information. The first information is a phase measurement value determined by the first device based on at least one first satellite signal, the second information is a phase measurement value determined by the access network device based on at least one first reference signal, the third information is a phase measurement value determined by the second device based on at least one second satellite signal, the fourth information is a phase measurement value determined by the access network device based on at least one second reference signal, the at least one first reference signal is sent by the first device, and the at least one second reference signal is sent by the second device. In this implementation, the first device and the second device each send the phase measurement value determined based on the at least one received satellite signal to the server, and the first device and the second device each send at least one reference signal to the access network device, so that the access network device sends the phase measurement value determined based on the at least one received reference signal to the server. In this way, the server can perform joint positioning based on these phase measurement values, thereby implementing high-precision positioning solution.

In a possible implementation, before the server receives the third information and the fourth information, the method further includes: The server determines the second device.

In another possible implementation, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

In still another possible implementation, the method further includes: The server receives a first measurement frequency, a second measurement frequency, a third measurement frequency, and/or a fourth measurement frequency. The first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

In still another possible implementation, the method further includes: The server sends first configuration information to the first device. The first configuration information includes at least one of the following information: the first measurement frequency, the second measurement frequency, a reporting period of the first information, and a reporting delay of the first information.

In still another possible implementation, the method further includes: The server sends second configuration information to the second device. The second configuration information includes at least one of the following information: the third measurement frequency, the fourth measurement frequency, a reporting period of the third information, and a reporting delay of the third information.

In still another possible implementation, the method further includes: The server sends a first measurement request and/or a first sending request to the first device. The first measurement request is used to request to measure a phase of the at least one received first satellite signal. The first sending request is used to request to send the at least one first reference signal.

In still another possible implementation, the method further includes: The server sends a second measurement request and/or a second sending request to the second device. The second measurement request is used to request to measure a phase of the at least one received second satellite signal. The second sending request is used to request to send the at least one second reference signal.

In still another possible implementation, that a server receives third information includes: The server receives a positioning protocol message, where the positioning protocol message includes the third information. The positioning protocol message is a communication protocol message between the first device/the second device and the server, and may be a new radio positioning protocol annex NRPPa message or a long term evolution positioning protocol LPP message.

According to a sixth aspect, a positioning apparatus is provided, and is configured to perform the method in any one of the first aspect or the possible implementations of the first aspect. The positioning apparatus may be the first device/the second device in any one of the first aspect or the possible implementations of the first aspect, or a module applied to the first device/the second device, for example, a chip or a chip system. The positioning apparatus includes a corresponding module, unit, or means (means) for implementing the foregoing method. The module, unit, or means may be implemented by using hardware or software, or implemented by using hardware executing corresponding software. The hardware or the software includes one or more modules or units corresponding to the foregoing functions.

With reference to the sixth aspect, in a possible implementation, the positioning apparatus includes a transceiver unit and a processing unit. The transceiver unit is configured to receive at least one satellite signal and at least one reference signal. The transceiver unit is configured to send first information and second information. The first information is a phase measurement value determined based on the at least one satellite signal, and the second information is a phase measurement value determined based on the at least one reference signal.

Optionally, the at least one satellite signal and the at least one reference signal are used for positioning.

Optionally, the first information includes at least one of the following information: a phase measurement value of each of the at least one satellite signal, a difference between phase measurement values of two of the at least one satellite signal, and a difference between phase measurement values of any one of the at least one satellite signal at two or more moments. The second information includes at least one of the following information: a phase measurement value of each of the at least one reference signal, a difference between phase measurement values of two of the at least one reference signal, and a difference between phase measurement values of any one of the at least one reference signal at two or more moments.

Optionally, the transceiver unit is further configured to send a first measurement frequency and/or a second measurement frequency. The first measurement frequency is a frequency of the at least one satellite signal, and the second measurement frequency is a frequency of the at least one reference signal.

Optionally, the transceiver unit is further configured to receive first configuration information and/or second configuration information. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

Optionally, the transceiver unit is further configured to receive a first measurement request and/or a second measurement request. The first measurement request is used to request to measure a phase of the at least one received satellite signal. The second measurement request is used to request to measure a phase of the at least one received reference signal.

Optionally, the transceiver unit is further configured to send a positioning protocol message, where the positioning protocol message includes the first information and the second information. The positioning protocol message is a communication protocol message between the first device/the second device and the server, and may be a new radio positioning protocol annex NRPPa message or a long term evolution positioning protocol LPP message.

In another possible implementation, the positioning apparatus is configured to perform the method in the first aspect and the possible implementations of the first aspect.

According to a seventh aspect, a positioning apparatus is provided, and is configured to perform the method in any one of the second aspect or the possible implementations of the second aspect. The positioning apparatus may be the server in any one of the second aspect or the possible implementations of the second aspect, or a module applied to the server, for example, a chip or a chip system. The positioning apparatus includes a corresponding module, unit, or means for implementing the foregoing method. The module, unit, or means may be implemented by using hardware or software, or implemented by using hardware executing corresponding software. The hardware or the software includes one or more modules or units corresponding to the foregoing functions.

With reference to the seventh aspect, in a possible implementation, the positioning apparatus includes a transceiver unit and a processing unit. The transceiver unit is configured to receive first information, second information, third information, and fourth information. The processing unit is configured to determine a location of a first device based on the first information, the second information, the third information, and the fourth information. The first information is a phase measurement value determined by the first device based on at least one first satellite signal, the second information is a phase measurement value determined by the first device based on at least one first reference signal, the third information is a phase measurement value determined by a second device based on at least one second satellite signal, and the fourth information is a phase measurement value determined by the second device based on at least one second reference signal.

Optionally, the processing unit is further configured to determine the second device.

Optionally, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

Optionally, the transceiver unit is further configured to receive a first measurement frequency, a second measurement frequency, a third measurement frequency, and/or a fourth measurement frequency. The first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

Optionally, the transceiver unit is further configured to send first configuration information and/or second configuration information to the first device. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

Optionally, the transceiver unit is further configured to send third configuration information and/or fourth configuration information to the second device. The third configuration information includes at least one of the following information: the third measurement frequency, a reporting period of the third information, and a reporting delay of the third information. The fourth configuration information includes at least one of the following information: the fourth measurement frequency, a reporting period of the fourth information, and a reporting delay of the fourth information.

Optionally, the transceiver unit is further configured to send a first measurement request and/or a second measurement request to the first device. The first measurement request is used to request to measure a phase of the at least one received first satellite signal. The second measurement request is used to request to measure a phase of the at least one received first reference signal.

Optionally, the transceiver unit is further configured to send a third measurement request and/or a fourth measurement request to the second device. The third measurement request is used to request to measure a phase of the at least one received second satellite signal. The fourth measurement request is used to request to measure a phase of the at least one received second reference signal.

Optionally, the transceiver unit is further configured to receive a positioning protocol message, where the positioning protocol message includes the first information and the second information. The positioning protocol message is a communication protocol message between the first device/the second device and the server, and may be a new radio positioning protocol annex NRPPa message or a long term evolution positioning protocol LPP message.

In another possible implementation, the positioning apparatus is configured to perform the method in the second aspect and the possible implementations of the second aspect.

According to an eighth aspect, a positioning apparatus is provided, and is configured to perform the method in any one of the third aspect or the possible implementations of the third aspect. The positioning apparatus may be the first device in any one of the third aspect or the possible implementations of the third aspect, or a module applied to the first device, for example, a chip or a chip system. The positioning apparatus includes a corresponding module, unit, or means for implementing the foregoing method. The module, unit, or means may be implemented by using hardware or software, or implemented by using hardware executing corresponding software. The hardware or the software includes one or more modules or units corresponding to the foregoing functions.

With reference to the eighth aspect, in a possible implementation, the positioning apparatus includes a transceiver unit and a processing unit. The transceiver unit is configured to receive at least one first satellite signal and at least one first reference signal. The transceiver unit is further configured to receive third information and fourth information. The third information is a phase measurement value determined by a second device based on at least one second satellite signal, and the fourth information is a phase measurement value determined by the second device based on at least one second reference signal. The processing unit is configured to determine a location of the first device based on first information, second information, the third information, and the fourth information. The first information is a phase measurement value determined by the first device based on the at least one first satellite signal, and the second information is a phase measurement value determined by the first device based on the at least one first reference signal.

Optionally, the transceiver unit is further configured to send a positioning request to a server.

Optionally, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

Optionally, the transceiver unit is further configured to send a first measurement frequency and/or a second measurement frequency. The first measurement frequency is a frequency of the at least one first satellite signal, and the second measurement frequency is a frequency of the at least one first reference signal.

Optionally, the transceiver unit is further configured to receive first configuration information and/or second configuration information. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

Optionally, the transceiver unit is further configured to receive a first measurement request and/or a second measurement request. The first measurement request is used to request to measure a phase of the at least one received first satellite signal. The second measurement request is used to request to measure a phase of the at least one received first reference signal.

Optionally, the transceiver unit is further configured to receive a radio resource control message, where the radio resource control message includes the third information and the fourth information. Alternatively, the transceiver unit is further configured to receive a long term evolution new radio positioning protocol annex NRPPa message, where the NRPPa message includes the third information and the fourth information. Alternatively, the transceiver unit is further configured to receive a sidelink message, where the sidelink message includes the third information and the fourth information.

In another possible implementation, the positioning apparatus is configured to perform the method in the third aspect and the possible implementations of the third aspect.

According to a ninth aspect, a positioning apparatus is provided, and is configured to perform the method in any one of the fourth aspect or the possible implementations of the fourth aspect. The positioning apparatus may be the first device/the second device in any one of the fourth aspect or the possible implementations of the fourth aspect, or a module applied to the first device/the second device, for example, a chip or a chip system. The positioning apparatus includes a corresponding module, unit, or means (means) for implementing the foregoing method. The module, unit, or means may be implemented by using hardware or software, or implemented by using hardware executing corresponding software. The hardware or the software includes one or more modules or units corresponding to the foregoing functions.

With reference to the ninth aspect, in a possible implementation, the positioning apparatus includes a transceiver unit and a processing unit. The transceiver unit is configured to receive at least one satellite signal. The transceiver unit is further configured to send at least one reference signal. The transceiver unit is further configured to send first information, where the first information is a phase measurement value determined based on the at least one satellite signal.

Optionally, the at least one satellite signal and the at least one reference signal are used for positioning.

Optionally, the first information includes at least one of the following information: a phase measurement value of each of the at least one satellite signal, a difference between phase measurement values of two of the at least one satellite signal, and a difference between phase measurement values of any one of the at least one satellite signal at two or more moments.

Optionally, the transceiver unit is further configured to send a first measurement frequency and/or a second measurement frequency. The first measurement frequency is a frequency of the at least one satellite signal, and the second measurement frequency is a frequency of the at least one reference signal.

Optionally, the transceiver unit is further configured to receive configuration information. The configuration information includes at least one of the following information: the first measurement frequency, the second measurement frequency, a reporting period of the first information, and a reporting delay of the first information.

Optionally, the transceiver unit is further configured to receive a measurement request and/or a sending request. The measurement request is used to request to measure a phase of the at least one received satellite signal. The sending request is used to request to send the at least one reference signal.

Optionally, the transceiver unit is further configured to send a positioning protocol message, where the positioning protocol message includes the first information. The positioning protocol message is a communication protocol message between the first device/the second device and the server, and may be a new radio positioning protocol annex NRPPa message or a long term evolution positioning protocol LPP message.

In another possible implementation, the positioning apparatus is configured to perform the method in the fourth aspect and the possible implementations of the fourth aspect.

According to a tenth aspect, a positioning apparatus is provided, and is configured to perform the method in any one of the fifth aspect or the possible implementations of the fifth aspect. The positioning apparatus may be the server in any one of the fifth aspect or the possible implementations of the fifth aspect, or a module applied to the server, for example, a chip or a chip system. The positioning apparatus includes a corresponding module, unit, or means for implementing the foregoing method. The module, unit, or means may be implemented by using hardware or software, or implemented by using hardware executing corresponding software. The hardware or the software includes one or more modules or units corresponding to the foregoing functions.

With reference to the tenth aspect, in a possible implementation, the positioning apparatus includes a transceiver unit and a processing unit. The transceiver unit is configured to receive first information sent by a first device, second information and fourth information sent by an access network device, and third information sent by a second device. The processing unit is configured to determine a location of the first device based on the first information, the second information, the third information, and the fourth information. The first information is a phase measurement value determined by the first device based on at least one first satellite signal, the second information is a phase measurement value determined by the access network device based on at least one first reference signal, the third information is a phase measurement value determined by the second device based on at least one second satellite signal, the fourth information is a phase measurement value determined by the access network device based on at least one second reference signal, the at least one first reference signal is sent by the first device, and the at least one second reference signal is sent by the second device.

Optionally, the processing unit is further configured to determine the second device.

Optionally, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

Optionally, the transceiver unit is further configured to receive a first measurement frequency, a second measurement frequency, a third measurement frequency, and/or a fourth measurement frequency. The first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

Optionally, the transceiver unit is further configured to send first configuration information to the first device. The first configuration information includes at least one of the following information: the first measurement frequency, the second measurement frequency, a reporting period of the first information, and a reporting delay of the first information.

Optionally, the transceiver unit is further configured to send second configuration information to the second device. The second configuration information includes at least one of the following information: the third measurement frequency, the fourth measurement frequency, a reporting period of the third information, and a reporting delay of the third information.

Optionally, the transceiver unit is further configured to send a first measurement request and/or a first sending request to the first device. The first measurement request is used to request to measure a phase of the at least one received first satellite signal. The first sending request is used to request to send the at least one first reference signal.

Optionally, the transceiver unit is further configured to send a second measurement request and/or a second sending request to the second device. The second measurement request is used to request to measure a phase of the at least one received second satellite signal. The second sending request is used to request to send the at least one second reference signal.

Optionally, the transceiver unit is further configured to receive a positioning protocol message, where the positioning protocol message includes the third information. The positioning protocol message is a new radio positioning protocol annex NRPPa message or a long term evolution positioning protocol LPP message.

In another possible implementation, the positioning apparatus is configured to perform the method in the fifth aspect and the possible implementations of the fifth aspect.

In still another possible implementation, the positioning apparatus in the sixth aspect to the tenth aspect includes a processor coupled to a memory. The processor is configured to support the apparatus in performing a corresponding function in the foregoing communication method. The memory is configured to be coupled to the processor, and the memory stores a computer program (or computer executable instructions) and/or data necessary for the apparatus. For example, the positioning apparatus may further include a communication interface, configured to support communication between the apparatus and another network element, for example, send or receive of data and/or a signal. For example, the communication interface may be a transceiver, a circuit, a bus, a module, or another type of communication interface. For example, the memory may be located inside the positioning apparatus and integrated with the processor, or may be located outside the positioning apparatus.

In still another possible implementation, the positioning apparatus in the sixth aspect to the tenth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to perform the foregoing method by using a logic circuit or executing code instructions. The transceiver apparatus may be a transceiver, a transceiver circuit, or an input/output interface, and is configured to receive a signal from another positioning apparatus other than the positioning apparatus and transmit the signal to the processor, or send a signal from the processor to another positioning apparatus other than the positioning apparatus. When the positioning apparatus is a chip, the transceiver apparatus is a transceiver circuit or an input/output interface.

When the positioning apparatus in the sixth aspect to the tenth aspect is a chip, a sending unit may be an output unit, for example, an output circuit or a communication interface, and a receiving unit may be an input unit, for example, an input circuit or a communication interface. When the positioning apparatus is a terminal, the sending unit may be a transmitter or a transmitter machine, and the receiving unit may be a receiver or a receiver machine.

The positioning apparatus in the sixth aspect to the tenth aspect may alternatively be referred to as a communication apparatus.

According to an eleventh aspect, a positioning system is provided. The positioning system includes the positioning apparatus according to any one of the sixth aspect or the implementations of the sixth aspect, and the positioning apparatus according to any one of the seventh aspect or the implementations of the seventh aspect.

According to a twelfth aspect, a positioning system is provided. The positioning system includes the positioning apparatus according to any one of the eighth aspect or the implementations of the eighth aspect.

According to a thirteenth aspect, a positioning system is provided. The positioning system includes the positioning apparatus according to any one of the ninth aspect or the implementations of the ninth aspect, and the positioning apparatus according to any one of the tenth aspect or the implementations of the tenth aspect.

According to a fourteenth aspect, a computer-readable storage medium is provided. The computer-readable storage medium stores a computer program or instructions. When the program or the instructions are executed by a processor, the method according to any one of the first aspect or the implementations of the first aspect is performed, or the method according to any one of the second aspect or the implementations of the second aspect is performed, or the method according to any one of the third aspect or the implementations of the third aspect is performed, or the method according to any one of the fourth aspect or the implementations of the fourth aspect is performed, or the method according to any one of the fifth aspect or the implementations of the fifth aspect is performed.

According to a fifteenth aspect, a computer program product is provided. When the computer program product is executed on a computing device, the method according to any one of the first aspect or the implementations of the first aspect is performed, or the method according to any one of the second aspect or the implementations of the second aspect is performed, or the method according to any one of the third aspect or the implementations of the third aspect is performed, or the method according to any one of the fourth aspect or the implementations of the fourth aspect is performed, or the method according to any one of the fifth aspect or the implementations of the fifth aspect is performed.

**BRIEF DESCRIPTION OF DRAWINGS**

FIG. 1 is a principle diagram of carrier phase ranging according to an embodiment of this application;

FIG. 2 is a diagram of carrier phase double difference positioning according to an embodiment of this application;

FIG. 3 is a diagram of an architecture of a positioning system in which a positioning method according to an embodiment of this application is used;

FIG. 4 is a diagram of an architecture of a positioning system in which a positioning method according to an embodiment of this application in a 5G mobile communication system is used;

FIG. 5 is a diagram of an architecture of another positioning system in which a positioning method according to an embodiment of this application in a 5G mobile communication system is used;

FIG. 6 is a schematic flowchart of a positioning method according to an embodiment of this application;

FIG. 7 is a diagram of a positioning scenario to which the method shown in FIG. 6 is applicable;

FIG. 8A and FIG. 8B are a schematic flowchart of another positioning method according to an embodiment of this application;

FIG. 9 is a schematic flowchart of still another positioning method according to an embodiment of this application;

FIG. 10 is a diagram of a positioning scenario to which the method shown in FIG. 9 is applicable;

FIG. 11A and FIG. 11B are a schematic flowchart of still another positioning method according to an embodiment of this application;

FIG. 12 is a schematic flowchart of still another positioning method according to an embodiment of this application;

FIG. 13 is a diagram of a positioning scenario to which the method shown in FIG. 12 is applicable;

FIG. 14A and FIG. 14B are a schematic flowchart of still another positioning method according to an embodiment of this application;

FIG. 15 is a diagram of a structure of a positioning apparatus 1600 according to an embodiment of this application; and

FIG. 16 is a diagram of a structure of a positioning apparatus 1700 according to an embodiment of this application.

## DESCRIPTION OF EMBODIMENTS

The following describes embodiments of this application with reference to the accompanying drawings in embodiments of this application.

A communication system (for example, a 5th generation (5th generation, 5G) cellular system) can provide a wide range of horizontal and vertical location services in different environments (such as rural, urban, or indoor). For example, the 5G system may provide different 5G positioning services based on requirements of a user, an operator, and a third party. A specific performance requirement is imposed on a positioning service of the 5G system. At a high positioning service level, a decimeter-level positioning requirement needs to be met. However, a current cellular positioning technology can hardly meet a centimeter-level and higher positioning requirement. A time difference of arrival (time difference of arrival, TDOA) technology can achieve submeter-level positioning precision in theory. However, its precision depends on a bandwidth of a positioning reference signal, and it is difficult to obtain a continuous wide spectrum in an actual system. A positioning method based on an angle and enhanced cell identity (enhanced cell identity, ECID) theoretically has poorer positioning precision.

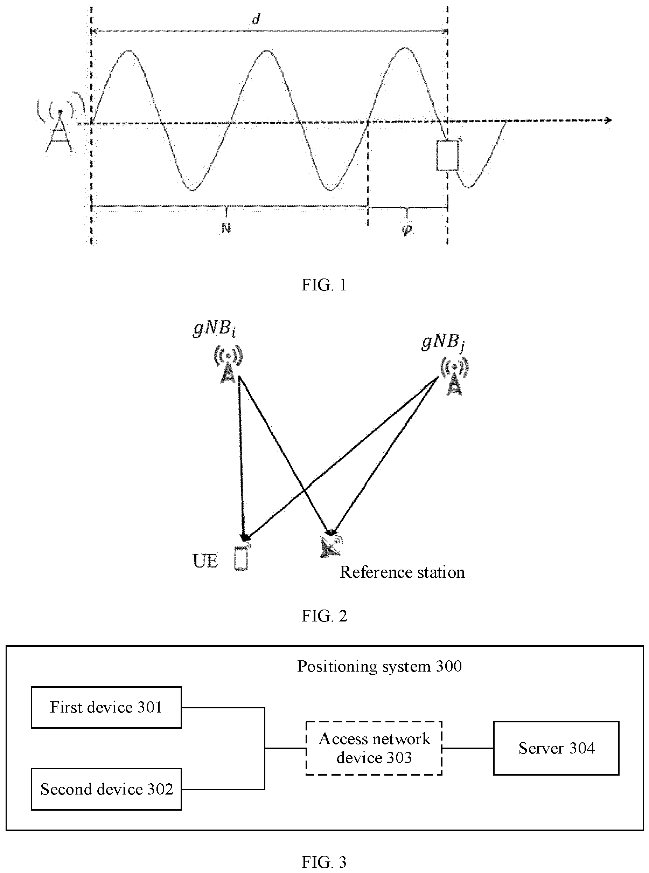

A carrier phase positioning technology is currently one of the main methods for high-precision positioning, and measures a distance with a whole-cycle ambiguity by measuring a carrier phase change of a reference signal from a transmitter to a receiver. When a carrier phase whole-cycle ambiguity can be correctly solved, precision of carrier phase ranging can reach a centimeter level to a millimeter level theoretically, to obtain a high-precision positioning result. A specific ranging principle is shown in FIG. 1.

A distance $d$ and a carrier phase $\varphi$ satisfy the following formula:

$$d = \lambda \left( N + \frac{\varphi}{2\pi} \right) \qquad (1)$$

$d$ is a distance between the receiver and the transmitter $\varphi$ is a carrier phase measurement value. $N$ represents a whole-cycle ambiguity and is an integer, and represents that $N$ carrier whole cycles have passed. $\lambda$ is a carrier wavelength.

A carrier phase positioning technology based on a GNSS signal includes a precise point positioning (precise point positioning, PPP) technology and a real time kinematic (real time kinematic, RTK) differential positioning technology.

The PPP technology is a single-point high-precision positioning technology based on a GNSS carrier phase, and does not require a reference station. Positioning is performed based on a precision product and a precision error model provided by an international GNSS service (international GNSS service, IGS).

The RTK technology is a dual-station relative positioning technology. During positioning, at least two GNSS receivers are required for a base station and a mobile station. Then, a common-mode error term including a clock error, an atmospheric error, and an ephemeris error is eliminated from observations in an inter-station or inter-satellite difference manner, to calculate a high-precision relative positioning result.

Positioning precision can reach a centimeter level to a millimeter level by using the PPP technology or the RTK technology.

In addition, in actual application of carrier phase positioning, to eliminate a common-mode error term such as a clock error (a clock between the receiver and the transmitter, and a clock between a plurality of transmitters are not synchronized), a carrier phase single difference or double difference technology is usually used. As shown in FIG. 2, a carrier phase double difference technology is described by using an example in which user equipment (user equipment, UE) receives a cellular signal.

A signal carrier phase measurement value of an $i^{th}$ base station ($gNB_i$) received by the UE is $\varphi_u^i$, and $\varphi_u^i$ satisfies the following formula:

$$\varphi_u^i = \lambda^{-1}(r_u^i) + f * (\delta t_u - \delta t^i) + N_u^i + \varepsilon_u^i \qquad (2)$$

$\lambda$ is a carrier wavelength. $r_u^i$ is a distance between the UE and the $i^{th}$ base station. $f$ is a carrier frequency. $\delta t_u$ is a local clock error of the receiver. $\delta t^i$ is a clock error of the $i^{th}$ base station. $N_u^i$ represents a whole-cycle ambiguity. $\varepsilon_u^i$ is a noise.

Difference calculation is performed on signal carrier phase measurement values of the $i^{th}$ base station and a $j^{th}$ base station ($gNB_j$) received by the UE, to obtain that a carrier phase single difference measurement value $\varphi_u^{ij} = \varphi_u^i - \varphi_u^j$, which satisfies the following formula:

$$\varphi_u^{ij} = \lambda^{-1}\left(r_u^{ij}\right) + f(\delta t^i - \delta t^j) + N_u^{ij} + \varepsilon_u^{ij} \qquad (3)$$

$r_u^{ij} = r_u^i - r_u^j$. $N_u^{ij}$ is a single difference whole-cycle ambiguity. $\varepsilon_u^{ij}$ is a single difference noise.

Further, difference calculation is performed on a carrier phase single difference measurement value $\varphi_u^{ij}$ of the UE and a carrier phase single difference measurement value $\varphi_r^{ij}$ of a reference station, to obtain that a carrier phase double difference measurement value $\varphi_{ur}^{ij} = \varphi_u^{ij} - \varphi_r^{ij}$, which satisfies the following formula:

$$\varphi_{ur}^{ij} = \lambda^{-1}\left(r_{ur}^{ij}\right) + N_{ur}^{ij} + \varepsilon_{ur}^{ij} \qquad (4)$$

$r_{ur}^{ij} = r_u^{ij} - r_r^{ij}$. $N_u^{ij}$ is a double difference whole-cycle ambiguity. $\varepsilon_u^{ij}$ is a double difference noise.

A plurality of formulas (4) can be obtained based on a plurality of base station signals, to form a set of simultaneous equations; and high-precision location information of the UE can be obtained by performing whole-cycle ambiguity solution.

Based on the GNSS carrier phase positioning technology, the carrier phase positioning technology depends on a quantity of received satellite signals. Signals from at least four satellites need to be received to implement high-precision positioning. In addition, a larger quantity of satellite signals indicates higher-precision positioning solution. However, in a dense environment such as a viaduct or a high-rise building, because a satellite signal coverage gap and/or a communication system signal coverage gap may exist due to obstructions or the like, the receiver may fail to receive signals from more than four satellites and/or communication system signals, thereby affecting positioning precision and failing to achieve centimeter-level positioning precision.

An embodiment of this application provides a positioning solution. A first device receives at least one first satellite signal and at least one first reference signal, and sends first information and second information. The first information is a phase measurement value determined based on the at least one satellite signal, and the second information is a phase measurement value determined based on the at least one reference signal. A second device receives at least one second satellite signal and at least one second reference signal, and sends third information and fourth information. The third information is a phase measurement value determined based on the at least one second satellite signal, and the fourth information is a phase measurement value determined based on the at least one second reference signal. A server receives the first information, the second information, the third information, and the fourth information, and determines a location of the first device based on the first information, the second information, the third information, and the fourth information. In this way, the server may perform joint positioning based on phase measurement values determined by a satellite signal and a reference signal that are received by each of the first device and the second device, thereby implementing high-precision positioning solution.

The technical solutions in embodiments of this application may be applied to various communication systems. For example, a long term evolution (long term evolution, LTE) system, an LTE frequency division duplex (frequency division duplex, FDD) system, an LTE time division duplex (time division duplex, TDD) system, a 5G system or a new radio (new radio, NR) system, or a next-generation communication system, such as a 6th generation (6th generation, 6G) mobile communication system. The 5G mobile communication system in this application includes a non-standalone (non-standalone, NSA) 5G mobile communication system or a standalone (standalone, SA) 5G mobile communication system. The technical solutions provided in this application can also be applied to a future communication system, for example, a 6th generation mobile communication system. Alternatively, the communication system may be a public land mobile network (public land mobile network, PLMN) network, a device-to-device (device-to-device, D2D) communication system, a machine-to-machine (machine to machine, M2M) communication system, an Internet of things (Internet of things, IoT), an Internet of vehicles communication system, or another communication system.

FIG. 3 is a diagram of an architecture of a positioning system in which a positioning method according to an embodiment of this application is used. As shown in FIG. 3, the positioning system 300 includes a first device 301, a second device 302, and a server 304. In this application, the first device 301 may be a terminal, the second device 302 may be a terminal or an access network device, and the server 304 may be a core network device, a positioning server, a component of a network device, or the like. The positioning system 300 may further include one or more access network devices 303 (in FIG. 3, one access network device is used as an example for illustration, and is represented by a dashed line). When the second device is a terminal, the first device 301 and the second device 302 may be served by a same access network device, or may be served by different access network devices. This application is described by using an example in which the first device and the second device may be served by a same access network device. The first device 301, the second device 302, the access network device 303, or the server 304 may directly communicate with each other, or may communicate with each other through forwarding by another device. This is not specifically limited in this embodiment of this application. Although not shown, the positioning system may further include another network element such as a mobility management network element. This is not specifically limited in this embodiment of this application.

For example, the positioning system provided in this embodiment of this application may be applied to the foregoing various communication systems. The 5G mobile communication system is used as an example. A network element or entity corresponding to the access network device in FIG. 3 may be a next-generation radio access network (next-generation radio access network, NG-RAN) device in the 5G mobile communication system.

For example, the server in this embodiment of this application may be a location management function (location management function, LMF) network element or a location management component (location management component, LMC) network element.

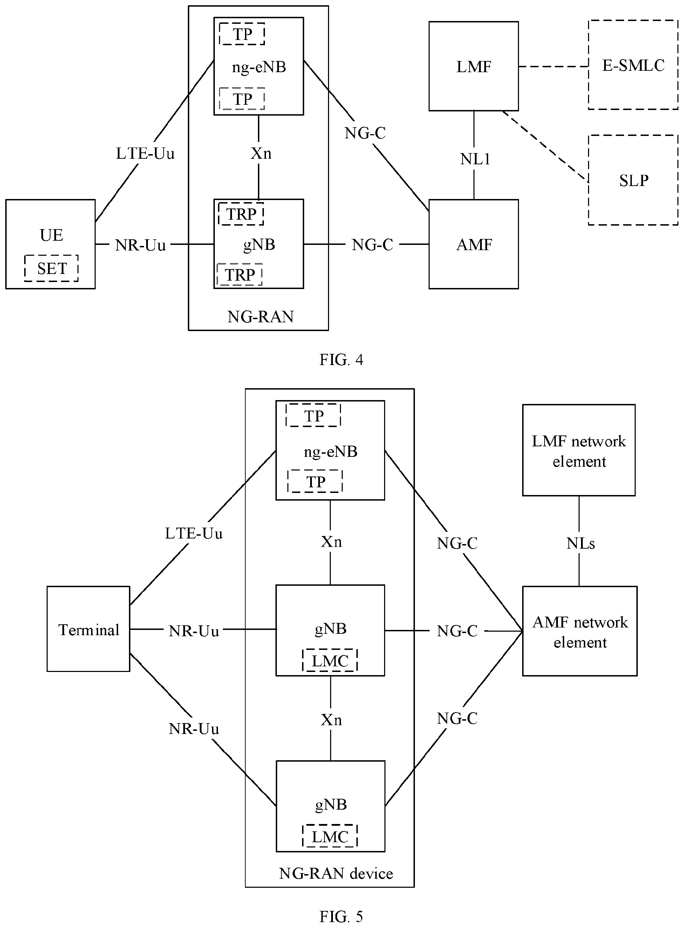

For example, FIG. 4 is a diagram of an architecture of a positioning system in which a positioning method according to an embodiment of this application in a 5G mobile communication system is used. As shown in FIG. 4, in the positioning system, a terminal is connected to a radio access network through an LTE-Uu interface via a next-generation evolved NodeB (next-generation evolved NodeB, ng-eNB), or through an NR-Uu interface via a next-generation NodeB (next-generation NodeB, gNB). The radio access network is connected to a core network through an NG-C interface via an access and mobility management function (access and mobility management function, AMF) network element. The NG-RAN includes one or more ng-eNBs (in FIG. 4, one ng-eNB is used as an example for illustration). The NG-RAN may alternatively include one or more gNBs (in FIG. 4, one gNB is used as an example for illustration). The NG-RAN may further include one or more ng-eNBs and one or more gNBs. The ng-eNB is an LTE base station connected to a 5G core network, and the gNB is a 5G base station connected to the 5G core network. The core network includes the AMF network element and the LMF network element. The AMF network element is configured to implement a function such as access management, and the LMF network element is configured to implement a function such as positioning or positioning assistance. The AMF network element is connected to the LMF network element through an $NL_1$ interface.

For example, FIG. 5 is a diagram of an architecture of another positioning system in which a positioning method according to an embodiment of this application in a 5G mobile communication system is used. A difference between the architecture of the positioning system in FIG. 5 and that in FIG. 4 lies in that an apparatus or a component (for example, the LMF network element) of a location management function in FIG. 4 is deployed in the core network, while an apparatus or a component (for example, the LMC network element) of a location management function in FIG. 5 may be deployed in the NG-RAN device. As shown in FIG. 5, the gNB includes the LMC network element. The LMC network element is a partial functional component of the LMF network element and can be integrated into the gNB of the NG-RAN device.

It should be understood that the devices or function nodes included in the positioning system in FIG. 4 or FIG. 5 are merely described as examples, and do not constitute a limitation on embodiments of this application. Actually, the positioning system in FIG. 4 or FIG. 5 may further include another network element, device, or function node that has an interaction relationship with the device or function node shown in the figure. This is not specifically limited herein.

For example, the terminal in this embodiment of this application may be an access terminal, a user unit, a user station, a mobile station, a mobile console, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a future 5G network, a terminal in a future evolved PLMN, a terminal in a future Internet of vehicles, or the like. This is not limited in this embodiment of this application.

As an example rather than a limitation, in this embodiment of this application, the terminal may be a mobile phone, a tablet computer, a computer having a wireless transceiver function, a virtual reality terminal, an augmented reality terminal, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a wearable device, or the like.

In addition, in this embodiment of this application, the terminal may alternatively be a terminal in an Internet of things (internet of things, IoT) system. The IoT is an important part in future development of information technologies. A main technical feature of the IoT is to connect things to a network by using a communication technology, to implement an intelligent network for human-machine interconnection and thing-thing interconnection. In this embodiment of this application, the IoT technology can implement massive connections, deep coverage, and terminal power saving by using, for example, a narrow band (narrow band, NB) technology.

In addition, in this embodiment of this application, the terminal may further include a sensor such as an intelligent printer, a train detector, and a gas station. Main functions of the sensor include collecting data (for some terminals), receiving control information and downlink data of the access network device, and sending an electromagnetic wave to transmit uplink data to the access network device.

For example, the access network device in this embodiment of this application may be any communication device having a wireless transceiver function for communicating with the terminal. The access network device includes but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The access network device may alternatively be a gNB, a TRP, or a TP in a 5G system, or one antenna panel or a group of antenna panels (including a plurality of antenna panels) of a base station in a 5G system. In addition, the access network device may alternatively be a network node that constitutes a gNB or a TP, for example, a BBU or a distributed unit (distributed unit, DU).

In some deployments, a gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, and a function related to radio frequency processing and an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node.

For example, the access network device and the terminal in this embodiment of this application may communicate with each other by using a licensed spectrum, or may communicate with each other by using an unlicensed spectrum, or may communicate with each other by using both a licensed spectrum and an unlicensed spectrum. The access network device and the terminal may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. A spectrum resource used between the access network device and the terminal is not limited in this embodiment of this application.

For example, the first device, the second device, or the server in this embodiment of this application may be deployed on land, including indoors, or outdoors, and may be held in hands or deployed in a vehicle, or may be deployed on water, or may be deployed on an aircraft, a balloon, or an artificial satellite in the air. An application scenario of the first device, the second device, or the server is not limited in this embodiment of this application.

With reference to FIG. 1 to FIG. 5, the following describes in detail the positioning method provided in this embodiment of this application.

It should be noted that names of messages between network elements, names of parameters in the messages, or the like in the following embodiments of this application are merely examples, and there may be other names during specific implementation. This is not specifically limited in embodiments of this application.

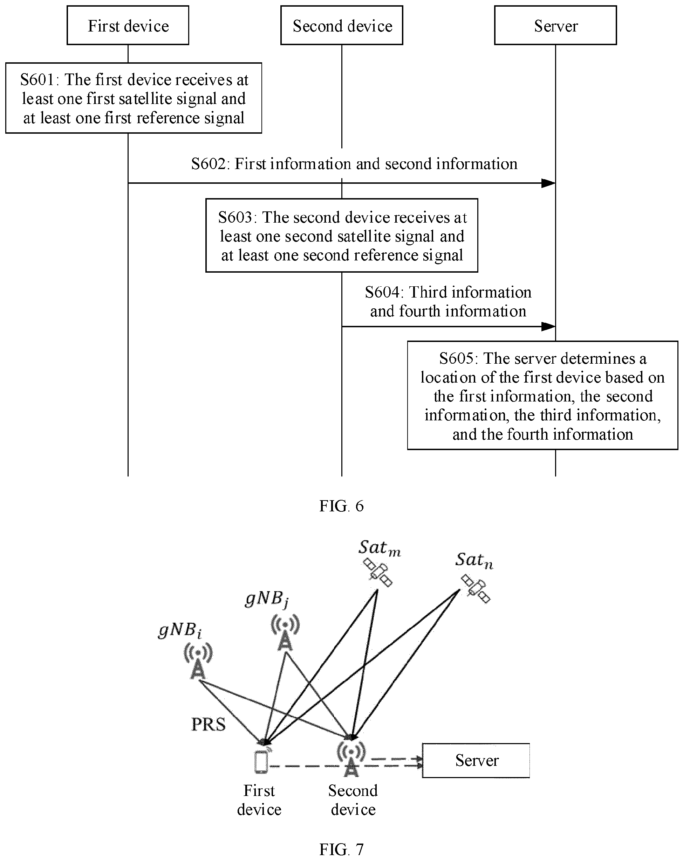

FIG. 6 is a schematic flowchart of a positioning method according to an embodiment of this application. The positioning method is applied to a downlink joint positioning scenario. The method may include the following steps.

S601: A first device receives at least one first satellite signal and at least one first reference signal.

In this embodiment, the first device is a to-be-positioned terminal. The first device may be blocked, and may receive the at least one first satellite signal and the at least one first reference signal. The at least one first satellite signal and the at least one first reference signal are used for positioning. For example, the first device receives at least one first satellite signal sent by a satellite, and the first device receives at least one first reference signal sent by an access network device. The at least one first satellite signal may be from a same satellite, or may be from different satellites. The at least one first reference signal may be from a same access network device, or may be from different access network devices. The satellite may be a global positioning system (global positioning system, GPS), a BeiDou navigation satellite system (BeiDou navigation satellite system, BDS), or the like.

As shown in FIG. 7, the first device receives at least one first positioning reference signal (positioning reference signal, PRS) sent by $gNB_i$ and/or $gNB_j$, and receives at least one first satellite signal sent by a satellite $Sat_m$ and/or a satellite $Sat_n$.

S602: The first device sends first information and second information.

Correspondingly, a server receives the first information and the second information.

After receiving the at least one first satellite signal, the first device measures a phase measurement value of the at least one first satellite signal, to obtain the first information. That is, the first information is a phase measurement value determined based on the at least one first satellite signal.

Specifically, the first device may measure the phase measurement value of the at least one first satellite signal, to obtain a phase measurement value of each of the at least one first satellite signal. The first device may further calculate a difference between phase measurement values of two of the at least one first satellite signal. For example, the first device uses a measured phase measurement value of a 1st satellite signal as a reference value, and calculates a difference between phase measurement values of other first satellite signals of the at least one first satellite signal and the reference value. The reference value may alternatively be a maximum value or a minimum value of the measured phase measurement value of the at least one first satellite signal. This is not limited in this embodiment. The first device may further select phase measurement values of a specific quantity of first satellite signals with good quality from a phase measurement value of each of the at least one first satellite signal. The first device may further measure phase measurement values of any one of the at least one first satellite signal at two or more moments. The any first satellite signal may be each first satellite signal. Further, a difference between the phase measurement values of the any first satellite signal at two or more moments may be further calculated. Further, the first device may further measure a difference between the phase measurement values of any one of the at least one first satellite signal at two or more moments.

After the phase measurement value is measured or calculated, the first information may include at least one of the following information: the phase measurement value of each of the at least one first satellite signal, the difference between the phase measurement values of two of the at least one first satellite signal, and the difference between the phase measurement values of any one of the at least one first satellite signal at two or more moments. For example, the first information may alternatively include phase measurement values of a specific quantity of first satellite signals with good quality in the at least one first satellite signal.

After receiving the at least one first reference signal, the first device measures a phase measurement value of the at least one first reference signal, to obtain the second information. That is, the second information is a phase measurement value determined based on the at least one first reference signal.

Specifically, the first device may measure the phase measurement value of the at least one first reference signal, to obtain a phase measurement value of each of the at least one first reference signal. The first device may further calculate a difference between phase measurement values of two of the at least one first reference signal. For example, the first device uses a measured phase measurement value of a 1st reference signal as a reference value, and calculates a difference between phase measurement values of other first reference signals of the at least one first reference signal and the reference value. The reference value may alternatively be a maximum value or a minimum value of the measured phase measurement value of the at least one first reference signal. This is not limited in this embodiment. The first device may further select phase measurement values of a specific quantity of first reference signals with good quality from a phase measurement value of each of the at least one first reference signal. The first device may further measure phase measurement values of any one of the at least one first reference signal at two or more moments. The any first reference signal may be each first reference signal. Further, a difference between phase measurement values of the any first reference signal at two or more moments may be calculated. Further, the first device may further measure a difference between the phase measurement values of any one of the at least one first reference signal at two or more moments.

After the phase measurement value is measured or calculated, the second information may include at least one of the following information: the phase measurement value of each of the at least one first reference signal, the difference between the phase measurement values of two of the at least one first reference signal, and the difference between the phase measurement values of any one of the at least one first reference signal at two or more moments. For example, the second information may alternatively include phase measurement values of a specific quantity of first reference signals with good quality in the at least one first reference signal.

As shown in FIG. 7, the first device sends the first information and the second information to the server.

S603: A second device receives at least one second satellite signal and at least one second reference signal.

In this embodiment, the second device may be a terminal or an access network device. The second device may alternatively be referred to as a PRU. The second device may be a device with a largest total quantity of communicable satellites and access network devices in common with the first device, or the second device may be a device with a total quantity of communicable satellites and access network devices in common with the first device exceeding a first threshold.

The second device may receive the at least one second satellite signal and the at least one second reference signal. The at least one second satellite signal and the at least one second reference signal are used for positioning. For example, the second device receives the at least one second satellite signal sent by the satellite, and the second device receives the at least one second reference signal sent by the access network device. The at least one second satellite signal may be from a same satellite, or may be from different satellites. The at least one second reference signal may be from a same access network device, or may be from different access network devices.

It may be understood that the at least one first satellite signal and the at least one second satellite signal may be completely the same, partially the same, or different. The at least one first reference signal and the at least one second reference signal may be completely the same, partially the same, or different. The at least one first satellite signal and the at least one second satellite signal may be from a same satellite or different satellites. The at least one first reference signal and the at least one second reference signal may be from a same access network device or different access network devices.

As shown in FIG. 7, the second device receives at least one second PRS sent by $gNB_i$ and/or $gNB_j$, and receives at least one second satellite signal sent by the satellite $Sat_m$ and/or the satellite $Sat_n$.

S604: The second device sends third information and fourth information.

Correspondingly, the server receives the third information and the fourth information.

After receiving the at least one second satellite signal, the second device measures a phase measurement value of the at least one second satellite signal, to obtain the third information. That is, the third information is a phase measurement value determined based on the at least one second satellite signal.

Specifically, the second device may measure the phase measurement value of the at least one second satellite signal, to obtain a phase measurement value of each of the at least one second satellite signal. The second device may further calculate a difference between phase measurement values of two of the at least one second satellite signal. For example, the second device uses a measured phase measurement value of a 1st satellite signal as a reference value, and calculates a difference between phase measurement values of other second satellite signals of the at least one second satellite signal and the reference value. The reference value may alternatively be a maximum value or a minimum value of the measured phase measurement value of the at least one second satellite signal. This is not limited in this embodiment. The second device may further select phase measurement values of a specific quantity of second satellite signals with good quality from a phase measurement value of each of the at least one second satellite signal. The second device may further measure phase measurement values of any one of the at least one second satellite signal at two or more moments. The any second satellite signal may be each second satellite signal. Further, a difference between the phase measurement values of the any second satellite signal at two or more moments may be further calculated. Further, the second device may further measure a difference between the phase measurement values of any one of the at least one second satellite signal at two or more moments.

After the phase measurement value is measured or calculated, the third information may include at least one of the following information: the phase measurement value of each of the at least one second satellite signal, the difference between the phase measurement values of two of the at least one second satellite signal, and the difference between the phase measurement values of any one of the at least one second satellite signal at two or more moments. For example, the third information may alternatively include phase measurement values of a specific quantity of second satellite signals with good quality in the at least one second satellite signal.

After receiving the at least one second reference signal, the second device measures a phase measurement value of the at least one second reference signal, to obtain the fourth information. That is, the fourth information is a phase measurement value determined based on the at least one second reference signal.

Specifically, the second device may measure the phase measurement value of the at least one second reference signal, to obtain a phase measurement value of each of the at least one second reference signal. The second device may further calculate a difference between phase measurement values of two of the at least one second reference signal. For example, the second device uses a measured phase measurement value of a 1st reference signal as a reference value, and calculates a difference between phase measurement values of other second reference signals of the at least one second reference signal and the reference value. The reference value may alternatively be a maximum value or a minimum value of the measured phase measurement value of the at least one second reference signal. This is not limited in this embodiment. The second device may further select phase measurement values of a specific quantity of second reference signals with good quality from a phase measurement value of each of the at least one second reference signal. The second device may further measure phase measurement values of any one of the at least one second reference signal at two or more moments. The any second reference signal may be each second reference signal. Further, a difference between phase measurement values of the any second reference signal at two or more moments may be calculated. Further, the second device may further measure a difference between the phase measurement values of any one of the at least one second reference signal at two or more moments.

After the phase measurement value is measured or calculated, the fourth information may include at least one of the following information: the phase measurement value of each of the at least one second reference signal, the difference between the phase measurement values of two of the at least one second reference signal, and the difference between the phase measurement values of any one of the at least one second reference signal at two or more moments. For example, the fourth information may alternatively include phase measurement values of a specific quantity of second reference signals with good quality in the at least one second reference signal.

As shown in FIG. 7, the second device sends the third information and the fourth information to the server

S605: The server determines a location of the first device based on the first information, the second information, the third information, and the fourth information.

The server receives the first information and the second information that are sent by the first device, and receives the third information and the fourth information that are sent by the second device. For example, the server may receive the first information, the second information, the third information, and the fourth information at the same time; or the server may receive the first information, the second information, the third information, and the fourth information in no particular sequence.

The server may determine the location of the first device based on the first information, the second information, the third information, and the fourth information. For example, the server can obtain a plurality of formulas (4) by using at least two reference signals and at least two satellite signals, to form a set of simultaneous equations; and high-precision location information of the first device can be obtained by performing whole-cycle ambiguity solution.

Specifically, after obtaining the first information, the second information, the third information, and the fourth information, the server may calculate a phase double difference measurement value according to formula (4), to form a set of simultaneous equations as the following formula:

$$\begin{cases} \varphi_{ur}^{ij} = \lambda_C^{-1} * \left( r_{ur}^{ij} \right) + N_{ur}^{ij} + \varepsilon_{ur}^{ij} \\ \qquad \cdots \\ \varphi_{ur}^{nm} = \lambda_G^{-1} * \left( r_{ur}^{mn} \right) + N_{ur}^{mn} + \varepsilon_{ur}^{mn} \end{cases} \qquad (5)$$

$\varphi_{ur}^{ij}$ is a carrier phase double difference measurement value corresponding to a reference signal. $\lambda_C$ is a carrier wavelength of the reference signal. $\varphi_{ur}^{nm}$ is a carrier phase double difference measurement value corresponding to a satellite signal. $\lambda_G$ is a carrier wavelength of the satellite signal. Location information of the first device and the second device is in $r_{ur}^{ij}$ and $r_{ur}^{mn}$. Through the set of simultaneous equations, carrier phase double difference measurement values of the reference signal and the satellite signal are jointly solved, and then the whole-cycle ambiguity is solved, so that a high-precision positioning result may be obtained as the following formula:

$$r_{ur}^{ij} = \left( \sqrt{(x_u - x^i)^2 + (y_u - y^i)^2 + (z_u - z^i)^2} - \sqrt{(x_u - x^j)^2 + (y_u - y^j)^2 + (z_u - z^j)^2} \right) -$$
$$\left( \sqrt{(x_r - x^i)^2 + (y_r - y^i)^2 + (z_r - z^i)^2} - \sqrt{(x_r - x^j)^2 + (y_r - y^j)^2 + (z_r - z^j)^2} \right) \quad (6)$$

$(x_u, y_u, z_u)$ is a three-dimensional location of the first device, and is a to-be-solved quantity. $(x_r, y_r, z_r)$ is a three-dimensional location of the second device. If a location of the second device is known, the location of the second device is used as a known quantity and is substituted into an equation. In this case, at least three equations are required in the set of simultaneous equations (5). If the location of the second device is unknown, the location of the second device is used as an unknown quantity and is solved together with a location of the first device. In this case, at least six equations are required in the set of simultaneous equations (5). $(x^i, y^i, z^i)$ and $(x^j, y^j, z^j)$ are three-dimensional location coordinates of an $i^{th}$ satellite and a $j^{th}$ satellite, and are known quantities. Similarly, $(x^m, y^m, z^m)$ and $(x^n, y^n, z^n)$ are three-dimensional location coordinates of an $m^{th}$ gNB and an $n^{th}$ gNB, and are known quantities. A formula similar to formula (6) for $r_{ur}^{mn}$ can be obtained. Finally, high-precision location coordinates of the first device are obtained by solving the set of simultaneous equations (5).

According to the positioning method provided in this embodiment of this application, the first device/the second device sends, to the server, the phase measurement values respectively determined based on the at least one satellite signal and the at least one reference signal that are received by the first device/the second device, so that the server can perform joint positioning based on the phase measurement values determined based on the satellite signal and the reference signal that are received by each of the first device and the second device, thereby implementing high-precision positioning solution.

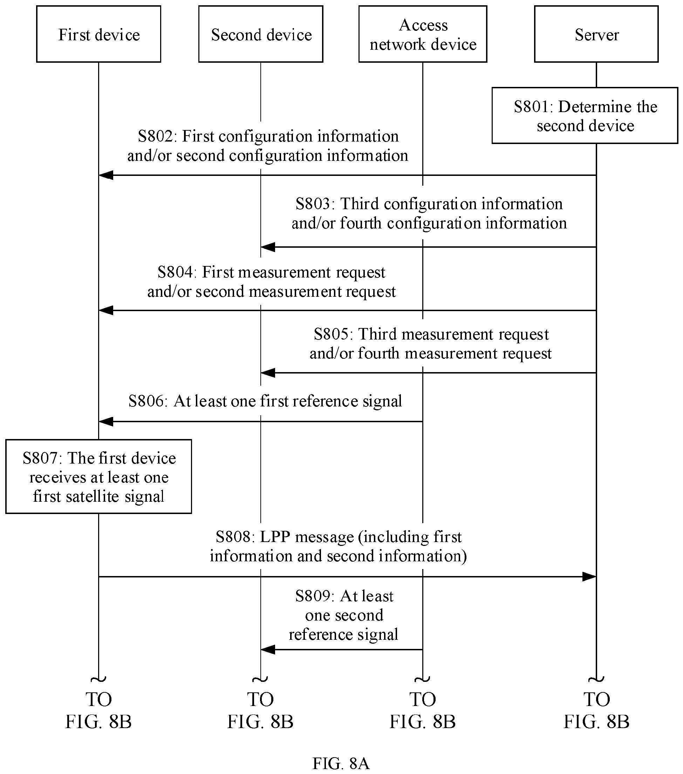

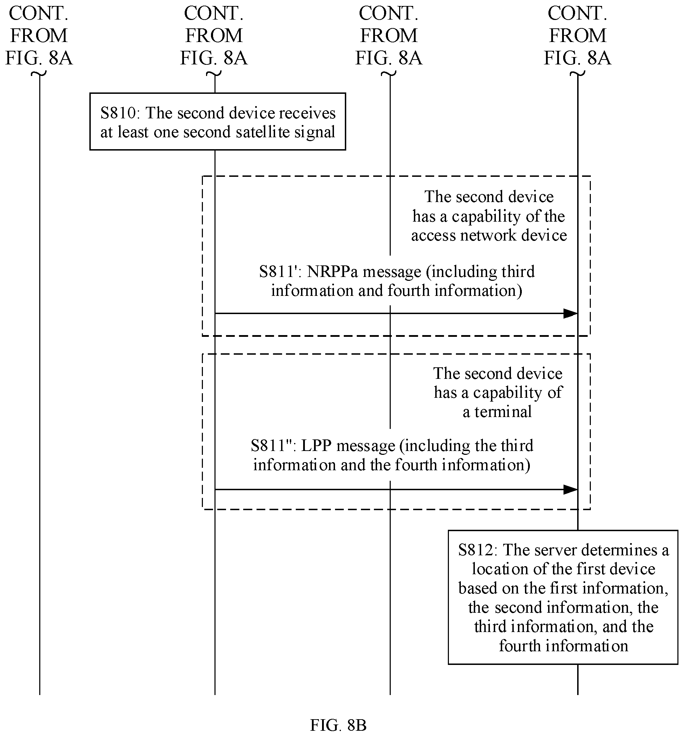

FIG. 8A and FIG. 8B are a schematic flowchart of another positioning method according to an embodiment of this application. The positioning method is applied to a downlink joint positioning scenario. The method may include the following steps.

S801: A server determines a second device.

When performing positioning solution for a first device, the server may determine a second device in advance. From a plurality of devices having communicable satellites and access network devices in common with the first device, the server may select a device with a largest total quantity of communicable satellites and access network devices in common with the first device, or a device with a total quantity of communicable satellites and access network devices in common with the first device exceeding a first threshold as the second device. The second device may be a terminal or an access network device. The second device may alternatively be referred to as a PRU.

S802: The server sends first configuration information and/or second configuration information to the first device.

Correspondingly, the first device receives the first configuration information and/or the second configuration information.

The first device is a to-be-positioned terminal. The first device may be blocked. However, the first device may still receive some satellite signals and some reference signals. The server may pre-configure how the first device measures a phase of a received satellite signal or reference signal, and configure how the first device reports a measured phase measurement value of the satellite signal or reference signal.

The server may send the first configuration information to the first device, where the first configuration information is used to configure measurement and reporting of a phase of at least one first satellite signal. Alternatively, the server sends the second configuration information to the first device, where the second configuration information is used to configure measurement and reporting of a phase of at least one first reference signal. Alternatively, the server sends the first configuration information and the second configuration information to the first device.

For example, the server may send the first configuration information and the second configuration information separately to the first device, or may send the first configuration information and the second configuration information together to the first device.

The first configuration information includes at least one of the following information: a first measurement frequency, a reporting period of first information, and a reporting delay of the first information. The first measurement frequency is a frequency of the at least one first satellite signal. The reporting period of the first information indicates the first device to report the first information in the period. The reporting delay of the first information indicates a delay in reporting the first information after the first device receives the at least one first satellite signal, a delay in reporting the first information after the first device receives the first configuration information, a delay in performing phase measurement after the first device receives the first measurement request, or the like.

The second configuration information includes at least one of the following information: a second measurement frequency, a reporting period of second information, and a reporting delay of the second information. The second measurement frequency is a frequency of the at least one first reference signal. The reporting period of the second information indicates the first device to report the second information in the period. The reporting delay of the second information indicates a delay in reporting the second information after the first device receives the at least one first reference signal, a delay in reporting the second information after the first device receives the second configuration information, a delay in performing phase measurement after the first device receives the second measurement request, or the like.

Alternatively, the first configuration information may not include the first measurement frequency, and instead, the first device sends the measurement frequency to the server.

Alternatively, the second configuration information may not include the second measurement frequency, and instead, the first device sends the measurement frequency to the server

S803: The server sends third configuration information and/or fourth configuration information to the second device.

Correspondingly, the second device receives the third configuration information and/or the fourth configuration information.

After determining the second device, the server may send the third configuration information and/or the fourth configuration information to the second device.

The server may send the third configuration information to the second device, where the third configuration information is used to configure measurement and reporting of a phase of at least one second satellite signal. Alternatively, the server sends the fourth configuration information to the second device, where the fourth configuration information is used to configure measurement and reporting of a phase of at least one second reference signal. Alternatively, the server sends the third configuration information and the fourth configuration information to the second device.

For example, the server may send the third configuration information and the fourth configuration information separately to the second device, or may send the third configuration information and the fourth configuration information together to the second device.

The third configuration information includes at least one of the following information: a third measurement frequency, a reporting period of third information, and a reporting delay of the third information. The third measurement frequency is a frequency of the at least one second satellite signal. The reporting period of the third information indicates the second device to report the third information in the period. The reporting delay of the third information indicates a delay in reporting the third information after the second device receives the at least one second satellite signal, a delay in reporting the third information after the second device receives the third configuration information, a delay in performing phase measurement after the second device receives the third measurement request, or the like.

The fourth configuration information includes at least one of the following information: a fourth measurement frequency, a reporting period of fourth information, and a reporting delay of the fourth information. The fourth measurement frequency is a frequency of the at least one second reference signal. The reporting period of the fourth information indicates the second device to report the fourth information in the period. The reporting delay of the fourth information indicates a delay in reporting the fourth information after the second device receives the at least one second reference signal, a delay in reporting the fourth information after the second device receives the fourth configuration information, a delay in performing phase measurement after the second device receives the fourth measurement request, or the like.

Alternatively, the third configuration information may not include the third measurement frequency, and instead, the second device sends the measurement frequency to the server.

Alternatively, the fourth configuration information may not include the fourth measurement frequency, and instead, the second device sends the measurement frequency to the server

For example, the first measurement frequency/the third measurement frequency is a frequency of at least one satellite signal, and may be an absolute frequency value of the satellite signal, may be represented by using a frequency number (for example, L1) of the satellite signal, or may be represented by using a satellite signal name (for example, B1C).

The second measurement frequency/the fourth measurement frequency is a frequency of at least one reference signal, and may be an absolute frequency value of the reference signal, or may be represented by using a resource element (resource element, RE) index of the reference signal, that is, is a frequency of a subcarrier corresponding to the RE index by default. The RE index may be a position index relative to a point A (point A) or relative to a 1st RE of the reference signal. The point A is a start point of a common resource block (common resource block, CRB). Alternatively, the measurement frequency may be represented by using a resource block (resource block, RB) index of the reference signal, for example, is a frequency of a subcarrier corresponding to a 1st RE of an RB by default. Alternatively, the measurement frequency may be represented by using an absolute radio-frequency channel number (absolute radio-frequency channel number, ARFCN). The second measurement frequency/the fourth measurement frequency may also be defined as a frequency corresponding to an RE on the reference signal in a form defined by a protocol, for example, a frequency corresponding to an RE in a bandwidth center of the reference signal.

S804: The server sends a first measurement request and/or a second measurement request to the first device.

Correspondingly, the first device receives the first measurement request and/or the second measurement request.

The first measurement request is used to request to measure a phase of the at least one received first satellite signal.

The second measurement request is used to request to measure a phase of the at least one received first reference signal.

For example, the server may send the first measurement request to the first device; or the server may send the second measurement request to the first device; or the server sends the first measurement request and the second measurement request to the first device.

For example, the server may send the first measurement request and the second measurement request separately to the first device; or the server may send the first measurement request and the second measurement request together to the first device.

S805: The server sends a third measurement request and/or a fourth measurement request to the second device.

Correspondingly, the second device receives the third measurement request and/or the fourth measurement request.

The third measurement request is used to request to measure a phase of the at least one received second satellite signal.

The fourth measurement request is used to request to measure a phase of the at least one received second reference signal.

For example, the server may send the third measurement request to the second device; or the server may send the fourth measurement request to the second device; or the server sends the third measurement request and the fourth measurement request to the second device.

For example, the server may send the third measurement request and the fourth measurement request separately to the second device; or the server may send the third measurement request and the fourth measurement request together to the second device.

S806: The access network device sends the at least one first reference signal.

Correspondingly, the first device receives the first reference signal.

For a specific implementation of this step, refer to step S601.

S807: The first device receives the at least one first satellite signal.

For a specific implementation of this step, refer to step S601.

S808: The first device sends an LPP message to the server, where the LPP message includes the first information and the second information.

Correspondingly, the server receives the first information and the second information.

The first information is a phase measurement value determined based on the at least one first satellite signal, and the second information is a phase measurement value determined based on the at least one first reference signal.

For a specific implementation of this step, refer to step S602.

For example, the first device may include the first information and the second information in the LPP message. In a 5G communication system, the LPP message is a message used for communication between a terminal and a server. With evolution of a communication system, the message name is not limited hereto, and may also be another message name, but a meaning of the message remains unchanged.

S809: The access network device sends the at least one second reference signal.

Correspondingly, the second device receives the second reference signal.

For a specific implementation of this step, refer to step S603.

S810: The second device receives the at least one second satellite signal.

For a specific implementation of this step, refer to step S603.

After receiving the at least one second satellite signal, the second device measures a phase measurement value of the at least one second satellite signal, to obtain the third information. After receiving the at least one second reference signal, the second device measures a phase measurement value of the at least one second reference signal, to obtain the fourth information.

The second device may send the third information and the fourth information to the server by using a positioning protocol message, where the positioning protocol message is a communication protocol message between the second device and the server. Based on different positioning protocol messages, the following implementations are available.

An implementation is S811': The second device has a capability of the access network device, and the second device sends an NRPPa message to the server, where the NRPPa message includes the third information and the fourth information.

Correspondingly, the server receives the NRPPa message.

In the 5G communication system, the NRPPa message is a message used for communication between an access network device and a server. With evolution of a communication system, the message name is not limited hereto, and may also be another message name, but a meaning of the message remains unchanged.

Another implementation is S811": The second device has a capability of the terminal, and the second device sends an LPP message to the server, where the LPP message includes the third information and the fourth information.

Correspondingly, the server receives the LPP message.

S812: The server determines a location of the first device based on the first information, the second information, the third information, and the fourth information.

For a specific implementation of this step, refer to step S605.

According to the positioning method provided in this embodiment of this application, the first device/the second device sends, to the server, the phase measurement values respectively determined based on the at least one satellite signal and the at least one reference signal that are received by the first device/the second device, so that the server can perform joint positioning based on the phase measurement values determined based on the satellite signal and the reference signal that are received by each of the first device and the second device, thereby implementing high-precision positioning solution.

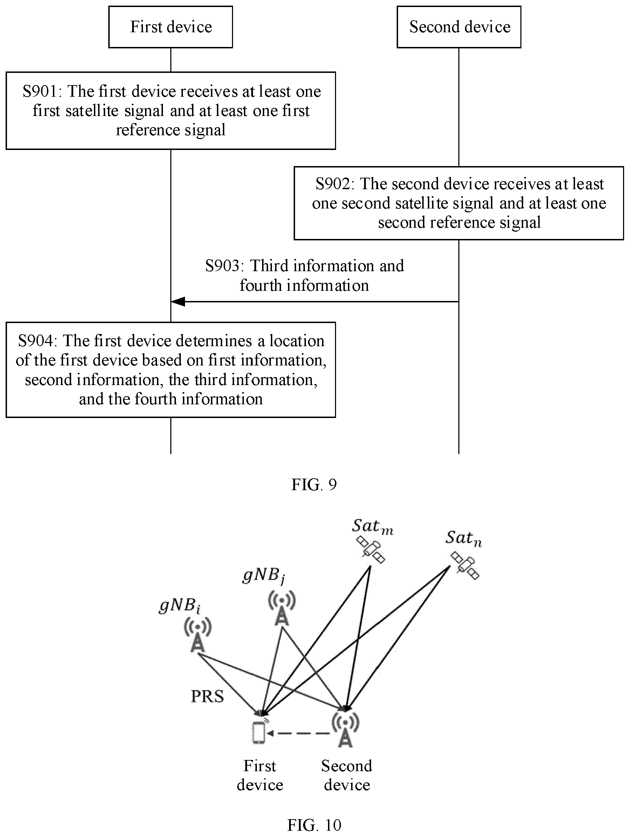

FIG. 9 is a schematic flowchart of still another positioning method according to an embodiment of this application. The method is applied to a downlink joint positioning scenario. The method may include the following steps.

S901: A first device receives at least one first satellite signal and at least one first reference signal.

For a specific implementation of this step, refer to step S601, or steps S806 and S807.

As shown in FIG. 10, the first device receives at least one first positioning reference signal sent by $gNB_i$ and/or $gNB_j$, and receives at least one first satellite signal sent by a satellite $Sat_m$ and/or a satellite $Sat_n$.

S902: A second device receives at least one second satellite signal and at least one second reference signal.

For a specific implementation of this step, refer to step S603, or steps S809 and S810.

As shown in FIG. 10, the second device receives at least one second PRS sent by $gNB_i$ and/or $gNB_j$, and receives at least one second satellite signal sent by the satellite $Sat_m$ and/or the satellite $Sat_n$.

S903: The second device sends third information and fourth information to the first device.

Correspondingly, the first device receives the third information and the fourth information.

The third information is a phase measurement value determined based on the at least one second satellite signal, and the fourth information is a phase measurement value determined based on the at least one second reference signal.

For obtaining of the third information and the fourth information and related meanings, refer to the foregoing embodiment. A difference from the foregoing embodiment lies in that the second device sends the third information and the fourth information to the first device.

As shown in FIG. 10, the second device sends the third information and the fourth information to the first device.

S904: The first device determines a location of the first device based on first information, second information, the third information, and the fourth information.

After receiving the at least one first satellite signal, the first device measures a phase measurement value of the at least one first satellite signal, to obtain the first information. That is, the first information is a phase measurement value determined based on the at least one first satellite signal. After receiving the at least one first reference signal, the first device measures a phase measurement value of the at least one first reference signal, to obtain the second information. That is, the second information is a phase measurement value determined based on the at least one first reference signal.

The first device determines the location of the first device based on the first information and the second information that are obtained by the first device and based on the third information and the fourth information that are received from the second device. For example, the first device can obtain a plurality of formulas (4) by using at least two reference signals and at least two satellite signals, to form a set of simultaneous equations; and high-precision location information of the first device can be obtained by performing whole-cycle ambiguity solution. For a specific implementation of this step, refer to step S605.

According to the positioning method provided in this embodiment of this application, the first device may perform joint positioning based on the phase measurement values respectively determined based on the at least one first satellite signal and the at least one first reference signal that are received by the first device and the phase measurement values respectively determined based on the at least one second satellite signal and the at least one second reference signal that are received by the second device, to determine the location of the first device, thereby implementing high-precision positioning solution.

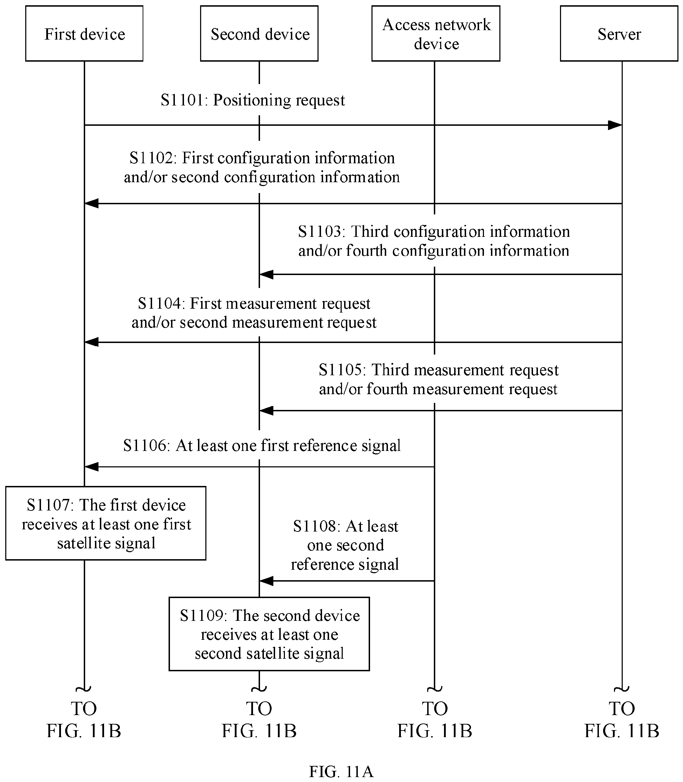

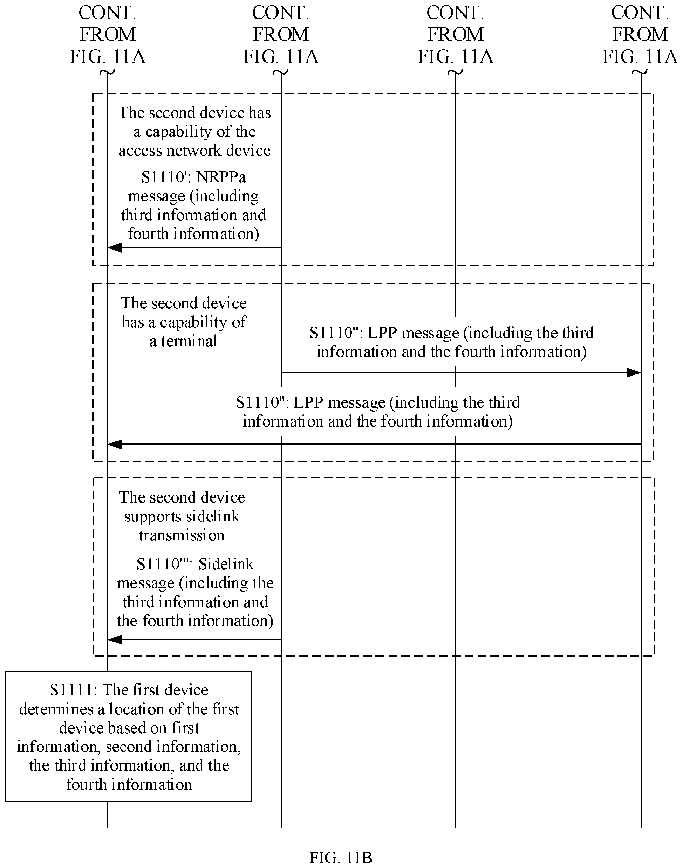

FIG. 11A and FIG. 11B are a schematic flowchart of still another positioning method according to an embodiment of this application. The method is applied to a downlink joint positioning scenario. The method may include the following steps.

S1101: A first device sends a positioning request to a server

Correspondingly, the server receives the positioning request.

In this embodiment, the first device itself performs positioning solution. The first device sends the positioning request to the server before performing positioning solution.

S1102: The server sends first configuration information and/or second configuration information to the first device.

Correspondingly, the first device receives the first configuration information and/or the second configuration information.

The first configuration information includes at least one of the following information: a first measurement frequency, a reporting period of first information, and a reporting delay of the first information.

The second configuration information includes at least one of the following information: a second measurement frequency, a reporting period of second information, and a reporting delay of the second information.

For a specific implementation of this step, refer to step S802.

S1103: The server sends third configuration information and/or fourth configuration information to a second device.

Correspondingly, the second device receives the third configuration information and/or the fourth configuration information.

The third configuration information includes at least one of the following information: a third measurement frequency, a reporting period of third information, and a reporting delay of the third information.

The fourth configuration information includes at least one of the following information: a fourth measurement frequency, a reporting period of fourth information, and a reporting delay of the fourth information.

For a specific implementation of this step, refer to step S803.

Further, before step S1103, the server may further determine the second device. For details, refer to step S801.

S1104: The server sends a first measurement request and/or a second measurement request to the first device.

Correspondingly, the first device receives the first measurement request and/or the second measurement request.

The first measurement request is used to request to measure a phase of at least one received first satellite signal.

The second measurement request is used to request to measure a phase of at least one received first reference signal.

For a specific implementation of this step, refer to step S804.

S1105: The server sends a third measurement request and/or a fourth measurement request to the second device.

Correspondingly, the second device receives the third measurement request and/or the fourth measurement request.

The third measurement request is used to request to measure a phase of at least one received second satellite signal.

The fourth measurement request is used to request to measure a phase of at least one received second reference signal.

For a specific implementation of this step, refer to step S805.

S1106: An access network device sends the at least one first reference signal.

Correspondingly, the first device receives the first reference signal.

For a specific implementation of this step, refer to step S601, S806, or S901.

S1107: The first device receives the at least one first satellite signal.

For a specific implementation of this step, refer to step S601, S807, or S901.

S1108: The access network device sends the at least one second reference signal.

Correspondingly, the second device receives the second reference signal.

For a specific implementation of this step, refer to step S603, S809, or S902.

S1109: The second device receives the at least one second satellite signal.

For a specific implementation of this step, refer to step S603, S810, or S902.

After receiving the at least one second satellite signal, the second device measures a phase measurement value of the at least one second satellite signal, to obtain the third information. After receiving the at least one second reference signal, the second device measures a phase measurement value of the at least one second reference signal, to obtain the fourth information.

The second device may send the third information and the fourth information to the first device by using a positioning protocol message, where the positioning protocol message is a communication protocol message between the second device and the server. Based on different positioning protocol messages, the following implementations are available.

An implementation is S1110': The second device has a capability of the access network device, and the second device sends an NRPPa message to the first device, where the NRPPa message includes the third information and the fourth information.

Correspondingly, the first device receives the NRPPa message.

Another implementation is S11 10": The second device has a capability of a terminal, and the second device sends an LPP message to the first device, where the LPP message includes the third information and the fourth information.

Correspondingly, the first device receives the LPP message.

Still another implementation is S1110‴: The second device supports sidelink (sidelink, SL) transmission, and the second device sends a sidelink message to the first device, where the sidelink message includes the third information and the fourth information.

Correspondingly, the first device receives the sidelink message.

The third information is a phase measurement value determined based on the at least one second satellite signal, and the fourth information is a phase measurement value determined based on the at least one second reference signal.

S1111: The first device determines a location of the first device based on the first information, the second information, the third information, and the fourth information.

For a specific implementation of this step, refer to step S605, S812, or S904.

According to the positioning method provided in this embodiment of this application, the first device may perform joint positioning based on the phase measurement values respectively determined based on the at least one first satellite signal and the at least one first reference signal that are received by the first device and the phase measurement values respectively determined based on the at least one second satellite signal and the at least one second reference signal that are received by the second device, to determine the location of the first device, thereby implementing high-precision positioning solution.

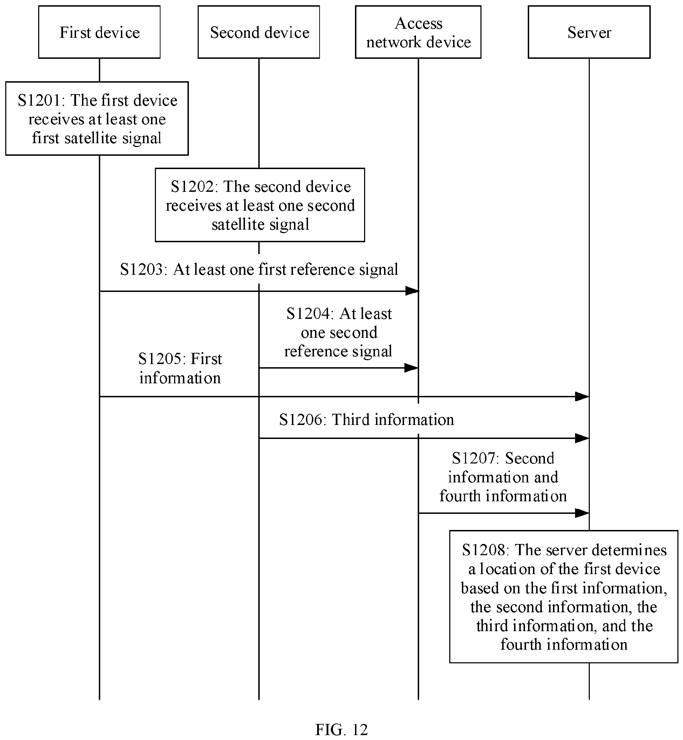

FIG. 12 is a schematic flowchart of still another positioning method according to an embodiment of this application. The method is applied to an uplink joint positioning scenario. The method may include the following steps.

S1201: A first device receives at least one first satellite signal.

For a specific implementation of this step, refer to step S601, S807, S901, or S1107.

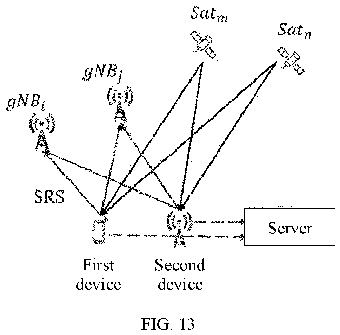

As shown in FIG. 13, the first device receives at least one first satellite signal sent by a satellite $Sat_m$ and/or a satellite $Sat_n$.

S1202: A second device receives at least one second satellite signal.

For a specific implementation of this step, refer to step S603, S810, S902, or S1109.

As shown in FIG. 13, the second device receives at least one second satellite signal sent by the satellite $Sat_m$ and/or the satellite $Sat_n$.

S1203: The first device sends at least one first reference signal to an access network device.

Correspondingly, the access network device receives the at least one first reference signal.

This embodiment is applied to an uplink joint positioning scenario. The first device may send the at least one first reference signal to the access network device. The first reference signal may be a sounding reference signal (sounding reference signal, SRS) or the like.

As shown in FIG. 13, the first device sends at least one first SRS to $gNB_i$ and/or $gNB_j$.

S1204: The second device sends at least one second reference signal to the access network device.

Correspondingly, the access network device receives the at least one second reference signal.

The second reference signal may also be an SRS or the like.

As shown in FIG. 13, the second device sends at least one second SRS to $gNB_i$ and/or $gNB_j$.

S1205: The first device sends first information to a server.

Correspondingly, the server receives the first information.

For a specific implementation of this step, refer to step S602 or S808. A difference from the foregoing embodiment lies in that the first device sends only the first information to the server

S1206: The second device sends third information to the server

Correspondingly, the server receives the third information.

For a specific implementation of this step, refer to step S604, S811', or S811". A difference from the foregoing embodiment lies in that the second device sends only the third information to the server

S1207: The access network device sends second information and fourth information to the server

Correspondingly, the server receives the second information and the fourth information.

After receiving the at least one first reference signal, the access network device measures a phase measurement value of the at least one first reference signal, to obtain the second information. That is, the second information is a phase measurement value determined based on the at least one first reference signal.

Specifically, the access network device may measure a phase measurement value of the at least one first reference signal, to obtain a phase measurement value of each of the at least one first reference signal. The access network device may further calculate a difference between phase measurement values of two of the at least one first reference signal. For example, the access network device uses a measured phase measurement value of a 1st reference signal as a reference value, and calculates a difference between phase measurement values of other first reference signals of the at least one first reference signal and the reference value. The reference value may alternatively be a maximum value or a minimum value of the measured phase measurement value of the at least one first reference signal. This is not limited in this embodiment. The access network device may further select phase measurement values of a specific quantity of first reference signals with good quality from a phase measurement value of each of the at least one first reference signal. The access network device may further measure phase measurement values of any one of the at least one first reference signal at two or more moments. The any first reference signal may be each first reference signal. Further, a difference between phase measurement values of the any first reference signal at two or more moments may be calculated. The access network device may further measure a difference between the phase measurement values of any one of the at least one first reference signal at two or more moments.

After the phase measurement value is measured or calculated, the second information may include at least one of the following information: the phase measurement value of each of the at least one first reference signal, the difference between the phase measurement values of two of the at least one first reference signal, and the difference between the phase measurement values of any one of the at least one first reference signal at two or more moments. For example, the second information may alternatively include phase measurement values of a specific quantity of first reference signals with good quality in the at least one first reference signal.

After receiving the at least one second reference signal, the access network device measures a phase measurement value of the at least one second reference signal, to obtain the fourth information. That is, the fourth information is a phase measurement value determined based on the at least one second reference signal.

Specifically, the access network device may measure the phase measurement value of the at least one second reference signal, to obtain a phase measurement value of each of the at least one second reference signal. The access network device may further calculate a difference between phase measurement values of two of the at least one second reference signal. For example, the access network device uses a measured phase measurement value of a 1st reference signal as a reference value, and calculates a difference between phase measurement values of other second reference signals of the at least one second reference signal and the reference value. The reference value may alternatively be a maximum value or a minimum value of the measured phase measurement value of the at least one second reference signal. This is not limited in this embodiment. The access network device may further select phase measurement values of a specific quantity of second reference signals with good quality from a phase measurement value of each of the at least one second reference signal. The access network device may further measure phase measurement values of any one of the at least one second reference signal at two or more moments. The any second reference signal may be each second reference signal. Further, a difference between phase measurement values of the any second reference signal at two or more moments may be calculated. The access network device may further measure a difference between the phase measurement values of any one of the at least one second reference signal at two or more moments.

After the phase measurement value is measured or calculated, the fourth information may include at least one of the following information: the phase measurement value of each of the at least one second reference signal, the difference between the phase measurement values of two of the at least one second reference signal, and the difference between the phase measurement values of any one of the at least one second reference signal at two or more moments. For example, the fourth information may alternatively include phase measurement values of a specific quantity of second reference signals with good quality in the at least one second reference signal.

S1208: The server determines a location of the first device based on the first information, the second information, the third information, and the fourth information.

For a specific implementation of this step, refer to step S605 or S812.

According to the positioning method provided in this embodiment of this application, the first device and the second device each send a phase measurement value determined based on at least one received satellite signal to the server, and the first device and the second device each send at least one reference signal to the access network device, so that the access network device sends a phase measurement value determined based on the at least one received reference signal to the server. In this way, the server can perform joint positioning based on these phase measurement values, thereby implementing high-precision positioning solution.

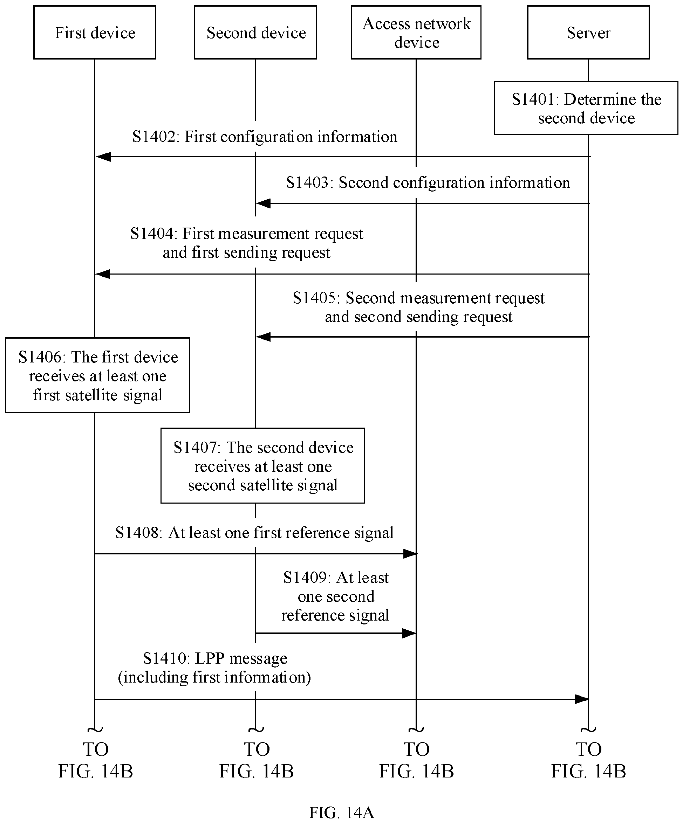

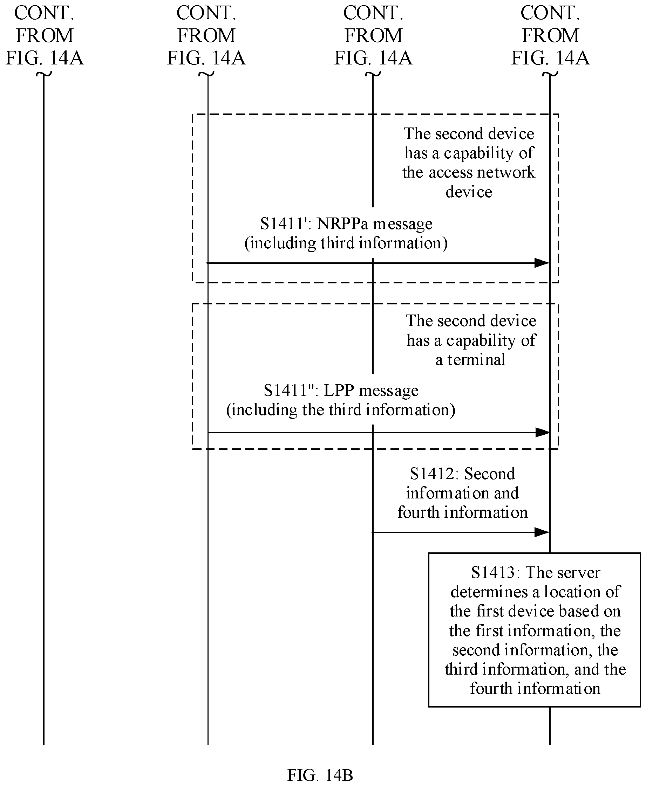

FIG. 14A and FIG. 14B are a schematic flowchart of still another positioning method according to an embodiment of this application. The method is applied to an uplink joint positioning scenario. The method may include the following steps.

S1401: A server determines a second device.

For a specific implementation of this step, refer to step S801.

S1402: The server sends first configuration information to a first device.

Correspondingly, the first device receives the first configuration information.

The first configuration information includes at least one of the following information: a first measurement frequency, a second measurement frequency, a reporting period of first information, and a reporting delay of the first information.

For a specific implementation of this step, refer to step S802.

Alternatively, the server may not configure the first measurement frequency and a second frequency, and instead, the first device sends the first measurement frequency and the second measurement frequency to the server

S1403: The server sends second configuration information to the second device.

Correspondingly, the second device receives the second configuration information.

The second configuration information includes at least one of the following information: a third measurement frequency, a fourth measurement frequency, a reporting period of third information, and a reporting delay of the third information.

For a specific implementation of this step, refer to step S803.

Alternatively, the server may not configure the third measurement frequency and the fourth measurement frequency, and instead, the second device sends the third measurement frequency and the fourth measurement frequency to the server.

S1404: The server sends a first measurement request and/or a first sending request to the first device.

Correspondingly, the first device receives the first measurement request and/or the first sending request.

The first measurement request is used to request to measure a phase of at least one received first satellite signal. The first sending request is used to request to send at least one first reference signal.

For a specific implementation of this step, refer to step S804. A difference from step S804 lies in that the server further sends the first sending request.

S1405: The server sends a second measurement request and/or a second sending request to the second device.

Correspondingly, the second device receives the second measurement request and/or the second sending request.

The second measurement request is used to request to measure a phase of at least one received second satellite signal. The second sending request is used to request to send at least one second reference signal.

For a specific implementation of this step, refer to step S805. A difference from step S805 lies in that the server further sends the second sending request.

S1406: The first device receives the at least one first satellite signal.

The at least one first satellite signal is used for positioning.

For a specific implementation of this step, refer to step S1201.

S1407: The second device receives the at least one second satellite signal.

The at least one second satellite signal is used for positioning.

For a specific implementation of this step, refer to step S1202.

S1408: The first device sends the at least one first reference signal to an access network device.

Correspondingly, the access network device receives the at least one first reference signal.

The at least one first reference signal is used for positioning.

For a specific implementation of this step, refer to step S1203.

S1409: The second device sends the at least one second reference signal to the access network device.

Correspondingly, the access network device receives the at least one second reference signal.

The at least one second reference signal is used for positioning.

For a specific implementation of this step, refer to step S1204.

S1410: The first device sends an LPP message to the server, where the LPP message includes the first information.

Correspondingly, the server receives the LPP message.

For a specific implementation of this step, refer to step S808.

The second device may send the third information to the server by using a positioning protocol message. Based on different positioning protocol messages, the following implementations are available.

In an implementation, the second device has a capability of the access network device, and in S1411', the second device sends an NRPPa message to the server, where the NRPPa message includes the third information. Correspondingly, the server receives the NRPPa message. For a specific implementation of this step, refer to step S811'.

In another implementation, the second device has a capability of a terminal, and in S1411", the second device sends an LPP message to the server, where the LPP message includes the third information. Correspondingly, the server receives the LPP message. For a specific implementation of this step, refer to step S811".

S1412: The access network device sends second information and fourth information to the server

Correspondingly, the server receives the second information and the fourth information.

For a specific implementation of this step, refer to step S1207. For example, the access network device may send an NRPPa message to the server, where the NRPPa message includes the second information and the fourth information.

S1413: The server determines a location of the first device based on the first information, the second information, the third information, and the fourth information.

For a specific implementation of this step, refer to step S605, S812, or S1208.

According to the positioning method provided in this embodiment of this application, the first device and the second device each send a phase measurement value determined based on at least one received satellite signal to the server, and the first device and the second device each send at least one reference signal to the access network device, so that the access network device sends a phase measurement value determined based on the at least one received reference signal to the server. In this way, the server can perform joint positioning based on these phase measurement values, thereby implementing high-precision positioning solution.

For example, in this embodiment of this application, the first device, the second device, or the server includes a hardware layer, an operating system layer running above the hardware layer, and an application layer running above the operating system layer. The hardware layer includes hardware such as a central processing unit (central processing unit, CPU), a memory management unit (memory management unit, MMU), a memory (also referred to as a main memory). An operating system may be any one or more type of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal, the access network device, or the server, or may be performed by a functional module that is in the first device, the second device, or the server and that can invoke and execute the program.

In other words, a related function of the first device, the second device, or the server in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, or may be a software function running on dedicated hardware, a combination of hardware and software, or a virtualization function instantiated on a platform (for example, a cloud platform).

It may be understood that, to implement the functions in the foregoing embodiments, the first device, the second device, or the server includes a corresponding hardware structure and/or software module for performing the functions. A person skilled in the art should be easily aware that this application can be implemented by hardware or a combination of hardware and computer software in combination with the units and the method steps in the examples described in embodiments disclosed in this application. Whether a function is performed by hardware or hardware driven by computer software depends on particular application scenarios and design constraints of technical solutions.

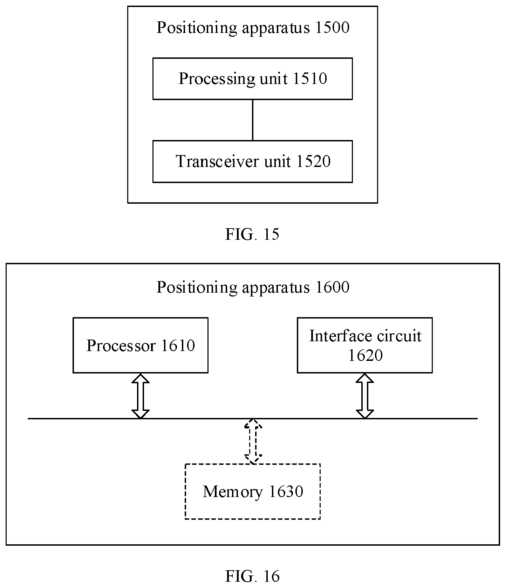

FIG. 15 and FIG. 16 are diagrams of structures of possible positioning apparatuses according to an embodiment of this application. The positioning apparatus may alternatively be a communication apparatus. These positioning apparatuses may be configured to implement a function of the first device, the second device, or the server in the foregoing method embodiments, and therefore can also implement beneficial effects of the foregoing method embodiments. In embodiments of this application, the positioning apparatus may be the first device, the second device, or the server, or may be a module (for example, a chip) applied to the first device, the second device, or the server

As shown in FIG. 15, a positioning apparatus 1500 includes a processing unit 1510 and a transceiver unit 1520. The positioning apparatus 1500 is configured to implement a function of the first device, the second device, or the server in the method embodiments shown in FIG. 6, FIG. 8A and FIG. 8B, FIG. 9, FIG. 11A and FIG. 11B, FIG. 12, and FIG. 14A and FIG. 14B.

When the positioning apparatus 1500 is configured to implement the function of the first device/the second device in the method embodiment shown in FIG. 6 or FIG. 8A and FIG. 8B, the transceiver unit 1520 is configured to receive at least one satellite signal and at least one reference signal. The transceiver unit 1520 is further configured to send first information and second information, where the first information is a phase measurement value determined based on the at least one satellite signal, and the second information is a phase measurement value determined based on the at least one reference signal.

In a possible implementation, the at least one satellite signal and the at least one reference signal are used for positioning.

In another possible implementation, the first information includes at least one of the following information: a phase measurement value of each of the at least one satellite signal, a difference between phase measurement values of two of the at least one satellite signal, and a difference between phase measurement values of any one of the at least one satellite signal at two or more moments. The second information includes at least one of the following information: a phase measurement value of each of the at least one reference signal, a difference between phase measurement values of two of the at least one reference signal, and a difference between phase measurement values of any one of the at least one reference signal at two or more moments.

In still another possible implementation, the transceiver unit 1520 is further configured to send a first measurement frequency and/or a second measurement frequency. The first measurement frequency is a frequency of the at least one satellite signal, and the second measurement frequency is a frequency of the at least one reference signal.

In still another possible implementation, the transceiver unit 1520 is further configured to receive first configuration information and/or second configuration information. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

In still another possible implementation, the transceiver unit 1520 is further configured to receive a first measurement request and/or a second measurement request. The first measurement request is used to request to measure a phase of the at least one received satellite signal. The second measurement request is used to request to measure a phase of the at least one received reference signal.

In still another possible implementation, the transceiver unit 1520 is further configured to send a positioning protocol message, where the positioning protocol message includes the first information and the second information. The positioning protocol message is a new radio positioning protocol annex NRPPa message or a long term evolution positioning protocol LPP message.

When the positioning apparatus 1500 is configured to implement the function of the server in the method embodiment shown in FIG. 6 or FIG. 8A and FIG. 8B, the transceiver unit 1520 is configured to receive first information, second information, third information, and fourth information. The processing unit 1510 is configured to determine a location of a first device based on the first information, the second information, the third information, and the fourth information. The first information is a phase measurement value determined by the first device based on at least one first satellite signal, the second information is a phase measurement value determined by the first device based on at least one first reference signal, the third information is a phase measurement value determined by a second device based on at least one second satellite signal, and the fourth information is a phase measurement value determined by the second device based on at least one second reference signal.

In a possible implementation, the processing unit 1510 is further configured to determine the second device.

In another possible implementation, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

In still another possible implementation, the transceiver unit 1520 is further configured to receive a first measurement frequency, a second measurement frequency, a third measurement frequency, and/or a fourth measurement frequency. The first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

In still another possible implementation, the transceiver unit 1520 is further configured to send first configuration information and/or second configuration information to the first device. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

In still another possible implementation, the transceiver unit 1520 is further configured to send third configuration information and/or fourth configuration information to the second device. The third configuration information includes at least one of the following information: the third measurement frequency, a reporting period of the third information, and a reporting delay of the third information. The fourth configuration information includes at least one of the following information: the fourth measurement frequency, a reporting period of the fourth information, and a reporting delay of the fourth information.

In still another possible implementation, the transceiver unit 1520 is further configured to send a first measurement request and/or a second measurement request to the first device. The first measurement request is used to request to measure a phase of the at least one received first satellite signal. The second measurement request is used to request to measure a phase of the at least one received first reference signal.

In still another possible implementation, the transceiver unit 1520 is further configured to send a third measurement request and/or a fourth measurement request to the second device. The third measurement request is used to request to measure a phase of the at least one received second satellite signal. The fourth measurement request is used to request to measure a phase of the at least one received second reference signal.

In still another possible implementation, the transceiver unit 1520 is further configured to receive a positioning protocol message, where the positioning protocol message includes the first information and the second information. The positioning protocol message is a new radio positioning protocol annex NRPPa message or a long term evolution positioning protocol LPP message.

When the positioning apparatus 1500 is configured to implement the function of the first device in the method embodiment shown in FIG. 9 or FIG. 11A and FIG. 11B, the transceiver unit 1520 is configured to receive at least one first satellite signal and at least one first reference signal. The transceiver unit 1520 is further configured to receive third information and fourth information. The third information is a phase measurement value determined by a second device based on at least one second satellite signal, and the fourth information is a phase measurement value determined by the second device based on at least one second reference signal. The processing unit 1510 is configured to determine a location of the first device based on first information, second information, the third information, and the fourth information. The first information is a phase measurement value determined by the first device based on the at least one first satellite signal, and the second information is a phase measurement value determined by the first device based on the at least one first reference signal.

In a possible implementation, the transceiver unit 1520 is further configured to send a positioning request to a server.

In another possible implementation, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

In still another possible implementation, the transceiver unit 1520 is further configured to send a first measurement frequency and/or a second measurement frequency. The first measurement frequency is a frequency of the at least one first satellite signal, and the second measurement frequency is a frequency of the at least one first reference signal.

In still another possible implementation, the transceiver unit 1520 is further configured to receive first configuration information and/or second configuration information. The first configuration information includes at least one of the following information: the first measurement frequency, a reporting period of the first information, and a reporting delay of the first information. The second configuration information includes at least one of the following information: the second measurement frequency, a reporting period of the second information, and a reporting delay of the second information.

In still another possible implementation, the transceiver unit 1520 is further configured to receive a first measurement request and/or a second measurement request. The first measurement request is used to request to measure a phase of the at least one received first satellite signal. The second measurement request is used to request to measure a phase of the at least one received first reference signal.

In still another possible implementation, the transceiver unit 1520 is further configured to receive a radio resource control message, where the radio resource control message includes the third information and the fourth information. Alternatively, the transceiver unit 1520 is further configured to receive a long term evolution new radio positioning protocol annex NRPPa message, where the NRPPa message includes the third information and the fourth information. Alternatively, the transceiver unit 1520 is further configured to receive a sidelink message, where the sidelink message includes the third information and the fourth information.

When the positioning apparatus 1500 is configured to implement the function of the first device/the second device in the method embodiment shown in FIG. 12 or FIG. 14A and FIG. 14B, the transceiver unit 1520 is configured to receive at least one satellite signal. The transceiver unit 1520 is further configured to send at least one reference signal. The transceiver unit 1520 is further configured to send first information, where the first information is a phase measurement value determined based on the at least one satellite signal.

In a possible implementation, the at least one satellite signal and the at least one reference signal are used for positioning.

In another possible implementation, the first information includes at least one of the following information: a phase measurement value of each of the at least one satellite signal, a difference between phase measurement values of two of the at least one satellite signal, and a difference between phase measurement values of any one of the at least one satellite signal at two or more moments.

In still another possible implementation, the transceiver unit 1520 is further configured to send a first measurement frequency and/or a second measurement frequency. The first measurement frequency is a frequency of the at least one satellite signal, and the second measurement frequency is a frequency of the at least one reference signal.

In still another possible implementation, the transceiver unit 1520 is further configured to receive configuration information. The configuration information includes at least one of the following information: the first measurement frequency, the second measurement frequency, a reporting period of the first information, and a reporting delay of the first information.

In still another possible implementation, the transceiver unit 1520 is further configured to receive a measurement request and/or a sending request. The measurement request is used to request to measure a phase of the at least one received satellite signal. The sending request is used to request to send the at least one reference signal.

In still another possible implementation, the transceiver unit 1520 is further configured to send a positioning protocol message, where the positioning protocol message includes the first information. The positioning protocol message is a new radio positioning protocol annex NRPPa message or a long term evolution positioning protocol LPP message.

When the positioning apparatus 1500 is configured to implement the function of the server in the method embodiment shown in FIG. 12 or FIG. 14A and FIG. 14B, the transceiver unit 1520 is configured to receive first information sent by a first device, second information and fourth information sent by an access network device, and third information sent by a second device. The processing unit 1510 is configured to determine a location of the first device based on the first information, the second information, the third information, and the fourth information. The first information is a phase measurement value determined by the first device based on at least one first satellite signal, the second information is a phase measurement value determined by the access network device based on at least one first reference signal, the third information is a phase measurement value determined by the second device based on at least one second satellite signal, the fourth information is a phase measurement value determined by the access network device based on at least one second reference signal, the at least one first reference signal is sent by the first device, and the at least one second reference signal is sent by the second device.

In a possible implementation, the processing unit 1510 is further configured to determine the second device.

In another possible implementation, the first information includes at least one of the following information: a phase measurement value of each of the at least one first satellite signal, a difference between phase measurement values of two of the at least one first satellite signal, and a difference between phase measurement values of any one of the at least one first satellite signal at two or more moments. The second information includes at least one of the following information: a phase measurement value of each of the at least one first reference signal, a difference between phase measurement values of two of the at least one first reference signal, and a difference between phase measurement values of any one of the at least one first reference signal at two or more moments. The third information includes at least one of the following information: a phase measurement value of each of the at least one second satellite signal, a difference between phase measurement values of two of the at least one second satellite signal, and a difference between phase measurement values of any one of the at least one second satellite signal at two or more moments. The fourth information includes at least one of the following information: a phase measurement value of each of the at least one second reference signal, a difference between phase measurement values of two of the at least one second reference signal, and a difference between phase measurement values of any one of the at least one second reference signal at two or more moments.

In still another possible implementation, the transceiver unit 1520 is further configured to receive a first measurement frequency, a second measurement frequency, a third measurement frequency, and/or a fourth measurement frequency. The first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

In still another possible implementation, the transceiver unit 1520 is further configured to send first configuration information to the first device. The first configuration information includes at least one of the following information: the first measurement frequency, the second measurement frequency, a reporting period of the first information, and a reporting delay of the first information.

In still another possible implementation, the transceiver unit 1520 is further configured to send second configuration information to the second device. The second configuration information includes at least one of the following information: the third measurement frequency, the fourth measurement frequency, a reporting period of the third information, and a reporting delay of the third information.

In still another possible implementation, the transceiver unit 1520 is further configured to send a first measurement request and/or a first sending request to the first device. The first measurement request is used to request to measure a phase of the at least one received first satellite signal. The first sending request is used to request to send the at least one first reference signal.

In still another possible implementation, the transceiver unit 1520 is further configured to send a second measurement request and/or a second sending request to the second device. The second measurement request is used to request to measure a phase of the at least one received second satellite signal. The second sending request is used to request to send the at least one second reference signal.

In still another possible implementation, the transceiver unit 1520 is further configured to receive a positioning protocol message, where the positioning protocol message includes the third information. The positioning protocol message is a new radio positioning protocol annex NRPPa message or a long term evolution positioning protocol LPP message.

For more detailed descriptions of the processing unit 1510 and the transceiver unit 1520, directly refer to related descriptions in the method embodiments shown in FIG. 6, FIG. 8A and FIG. 8B, FIG. 9, FIG. 11A and FIG. 11B, FIG. 12, and FIG. 14A and FIG. 14B. Details are not described herein again.

As shown in FIG. 16, a positioning apparatus 1600 includes a processor 1610 and an interface circuit 1620. The processor 1610 and the interface circuit 1620 are coupled to each other. It may be understood that the interface circuit 1620 may be a transceiver or an input/output interface. For example, the positioning apparatus 1600 may further include a memory 1630, configured to store instructions executed by the processor 1610, or store input data required by the processor 1610 to run instructions, or store data generated after the processor 1610 runs instructions.

When the positioning apparatus 1600 is configured to implement the methods shown in FIG. 6, FIG. 8A and FIG. 8B, FIG. 9, FIG. 11A and FIG. 11B, FIG. 12, and FIG. 14A and FIG. 14B, the processor 1610 is configured to implement a function of the processing unit 1510, and the interface circuit 1620 is configured to implement a function of the transceiver unit 1520.

When the foregoing positioning apparatus is a chip used in a terminal, the chip of the terminal implements a function of the terminal in the foregoing method embodiments. The chip of the terminal receives information from another module (for example, a radio frequency module or an antenna) in the terminal, where the information is sent by an access network device or a server to the terminal. Alternatively, the chip of the terminal sends information to another module (for example, a radio frequency module or an antenna) in the terminal, where the information is sent by the terminal to an access network device or a server.

When the positioning apparatus is a chip used in an access network device, the chip of the access network device implements a function of the access network device in the foregoing method embodiments. The chip of the access network device receives information from another module (for example, a radio frequency module or an antenna) in the access network device, where the information is sent by a terminal or a server to the access network device. Alternatively, the chip of the access network device sends information to another module (for example, a radio frequency module or an antenna) in the access network device, where the information is sent by the access network device to a terminal or a server

When the positioning apparatus is a chip used in a server, the chip of the server implements a function of the server in the foregoing method embodiments. The chip of the server receives information from another module (for example, a radio frequency module or an antenna) in the server, where the information is sent by a terminal or an access network device to the server. Alternatively, the chip of the server sends information to another module (for example, a radio frequency module or an antenna) in the server, where the information is sent by the server to a terminal or an access network device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disk read-only memory (compact disc read-only memory, CD-ROM), or any other form of storage medium well-known in the art. For example, a storage medium is coupled to the processor, so that the processor can read information from the storage medium or write information into the storage medium. Certainly, the storage medium may be a component of the processor. The processor and the storage medium may be located in an ASIC. In addition, the ASIC may be located in a base station or a terminal. Certainly, the processor and the storage medium may exist in the base station or the terminal as discrete components.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer programs or instructions. When the computer programs or instructions are loaded and executed on a computer, all or some of the processes or the functions in embodiments of this application are performed. The computer may be a general-purpose computer, a dedicated computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes. It should be understood that ordinal numerals such as "first" and "second" mentioned in embodiments of this application are intended to distinguish between a plurality of objects, and are not intended to limit sizes, content, orders, time sequences, priorities, importance, or the like of a plurality of objects.

**Claims**

1. A positioning method, wherein the method comprises:

   receiving at least one satellite signal and at least one reference signal; and
   sending first information and second information, wherein the first information is a phase measurement value determined based on the at least one satellite signal, and the second information is a phase measurement value determined based on the at least one reference signal.

2. The method according to claim 1, wherein the at least one satellite signal and the at least one reference signal are used for positioning.

3. The method according to claim 1 or 2, wherein the first information comprises at least one of the following information: a phase measurement value of each of the at least one satellite signal, a difference between phase measurement values of two of the at least one satellite signal, and a difference between phase measurement values of any one of the at least one satellite signal at two or more moments; and
   the second information comprises at least one of the following information: a phase measurement value of each of the at least one reference signal, a difference between phase measurement values of two of the at least one reference signal, and a difference between phase measurement values of any one of the at least one reference signal at two or more moments.

4. The method according to any one of claims 1 to 3, wherein the method further comprises:
   sending a first measurement frequency and/or a second measurement frequency, wherein the first measurement frequency is a frequency of the at least one satellite signal, and the second measurement frequency is a frequency of the at least one reference signal.

5. The method according to any one of claims 1 to 4, wherein the method further comprises:

receiving first configuration information and/or second configuration information, wherein
the first configuration information comprises at least one of the following information: the first measurement frequency, a reporting period of the first information, and a reporting delay of the first information; and
the second configuration information comprises at least one of the following information: the second measurement frequency, a reporting period of the second information, and a reporting delay of the second information.

6. The method according to any one of claims 1 to 5, wherein before the sending first information and second information, the method further comprises:

receiving a first measurement request and/or a second measurement request, wherein
the first measurement request is used to request to measure a phase of the at least one received satellite signal; and
the second measurement request is used to request to measure a phase of the at least one received reference signal.

7. The method according to any one of claims 1 to 6, wherein the sending first information and second information comprises:

sending a positioning protocol message, wherein the positioning protocol message comprises the first information and the second information, wherein
the positioning protocol message is a new radio positioning protocol annex NRPPa message or a long term evolution positioning protocol LPP message.

8. A positioning method, wherein the method comprises:

receiving first information, second information, third information, and fourth information; and
determining a location of a first device based on the first information, the second information, the third information, and the fourth information, wherein
the first information is a phase measurement value determined by the first device based on at least one first satellite signal, the second information is a phase measurement value determined by the first device based on at least one first reference signal, the third information is a phase measurement value determined by a second device based on at least one second satellite signal, and the fourth information is a phase measurement value determined by the second device based on at least one second reference signal.

9. The method according to claim 8, wherein before the receiving third information and fourth information, the method further comprises:
determining the second device.

10. The method according to claim 8 or 9, wherein the first information comprises at least one of the following information: a phase measurement value of each of the at least one first satellite signal, a difference between phase measurement values of two of the at least one first satellite signal, and a difference between phase measurement values of any one of the at least one first satellite signal at two or more moments;

the second information comprises at least one of the following information: a phase measurement value of each of the at least one first reference signal, a difference between phase measurement values of two of the at least one first reference signal, and a difference between phase measurement values of any one of the at least one first reference signal at two or more moments;
the third information comprises at least one of the following information: a phase measurement value of each of the at least one second satellite signal, a difference between phase measurement values of two of the at least one second satellite signal, and a difference between phase measurement values of any one of the at least one second satellite signal at two or more moments; and
the fourth information comprises at least one of the following information: a phase measurement value of each of the at least one second reference signal, a difference between phase measurement values of two of the at least one second reference signal, and a difference between phase measurement values of any one of the at least one second reference signal at two or more moments.

**11.** The method according to any one of claims 8 to 10, wherein the method further comprises:

receiving a first measurement frequency, a second measurement frequency, a third measurement frequency, and/or a fourth measurement frequency, wherein the first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

**12.** The method according to any one of claims 8 to 11, wherein the method further comprises:

sending first configuration information and/or second configuration information to the first device, wherein the first configuration information comprises at least one of the following information: the first measurement frequency, a reporting period of the first information, and a reporting delay of the first information; and the second configuration information comprises at least one of the following information: the second measurement frequency, a reporting period of the second information, and a reporting delay of the second information.

**13.** The method according to any one of claims 8 to 12, wherein the method further comprises:

sending third configuration information and/or fourth configuration information to the second device, wherein the third configuration information comprises at least one of the following information: the third measurement frequency, a reporting period of the third information, and a reporting delay of the third information; and the fourth configuration information comprises at least one of the following information: the fourth measurement frequency, a reporting period of the fourth information, and a reporting delay of the fourth information.

**14.** The method according to any one of claims 8 to 13, wherein the method further comprises:

sending a first measurement request and/or a second measurement request to the first device, wherein the first measurement request is used to request to measure a phase of the at least one received first satellite signal; and the second measurement request is used to request to measure a phase of the at least one received first reference signal.

**15.** The method according to any one of claims 8 to 14, wherein the method further comprises:

sending a third measurement request and/or a fourth measurement request to the second device, wherein the third measurement request is used to request to measure a phase of the at least one received second satellite signal; and the fourth measurement request is used to request to measure a phase of the at least one received second reference signal.

**16.** The method according to any one of claims 8 to 15, wherein the receiving third information and fourth information comprises:

receiving a positioning protocol message, wherein the positioning protocol message comprises the first information and the second information, wherein the positioning protocol message is a new radio positioning protocol annex NRPPa message or a long term evolution positioning protocol LPP message.

**17.** A positioning method, wherein the method comprises:

receiving, by a first device, at least one first satellite signal and at least one first reference signal; receiving, by the first device, third information and fourth information, wherein the third information is a phase measurement value determined by a second device based on at least one second satellite signal, and the fourth information is a phase measurement value determined by the second device based on at least one second reference signal; and determining, by the first device, a location of the first device based on first information, second information, the third information, and the fourth information, wherein the first information is a phase measurement value determined by the first device based on the at least one first satellite signal, and the second information is a phase measurement value determined by the first device based on the at least one first reference signal.

18. The method according to claim 17, wherein before the receiving, by a first device, at least one first satellite signal and at least one first reference signal, the method further comprises:
sending, by the first device, a positioning request to a server

19. The method according to claim 17 or 18, wherein the first information comprises at least one of the following information: a phase measurement value of each of the at least one first satellite signal, a difference between phase measurement values of two of the at least one first satellite signal, and a difference between phase measurement values of any one of the at least one first satellite signal at two or more moments;

the second information comprises at least one of the following information: a phase measurement value of each of the at least one first reference signal, a difference between phase measurement values of two of the at least one first reference signal, and a difference between phase measurement values of any one of the at least one first reference signal at two or more moments;
the third information comprises at least one of the following information: a phase measurement value of each of the at least one second satellite signal, a difference between phase measurement values of two of the at least one second satellite signal, and a difference between phase measurement values of any one of the at least one second satellite signal at two or more moments; and
the fourth information comprises at least one of the following information: a phase measurement value of each of the at least one second reference signal, a difference between phase measurement values of two of the at least one second reference signal, and a difference between phase measurement values of any one of the at least one second reference signal at two or more moments.

20. The method according to any one of claims 17 to 19, wherein the method further comprises:
sending, by the first device, a first measurement frequency and/or a second measurement frequency, wherein the first measurement frequency is a frequency of the at least one first satellite signal, and the second measurement frequency is a frequency of the at least one first reference signal.

21. The method according to any one of claims 17 to 20, wherein the method further comprises:

receiving, by the first device, first configuration information and/or second configuration information, wherein the first configuration information comprises at least one of the following information: the first measurement frequency, a reporting period of the first information, and a reporting delay of the first information; and
the second configuration information comprises at least one of the following information: the second measurement frequency, a reporting period of the second information, and a reporting delay of the second information.

22. The method according to any one of claims 17 to 21, wherein before the receiving, by a first device, at least one first satellite signal and at least one first reference signal, the method further comprises:

receiving, by the first device, a first measurement request and/or a second measurement request, wherein the first measurement request is used to request to measure a phase of the at least one received first satellite signal; and
the second measurement request is used to request to measure a phase of the at least one received first reference signal.

23. The method according to any one of claims 17 to 22, wherein the receiving, by the first device, third information and fourth information comprises:

receiving, by the first device, a radio resource control message, wherein the radio resource control message comprises the third information and the fourth information; or
receiving, by the first device, a long term evolution new radio positioning protocol annex NRPPa message, wherein the NRPPa message comprises the third information and the fourth information; or
receiving, by the first device, a sidelink message, wherein the sidelink message comprises the third information and the fourth information.

24. A positioning method, wherein the method comprises:

   receiving at least one satellite signal;
   sending at least one reference signal; and
   sending first information, wherein the first information is a phase measurement value determined based on the at least one satellite signal.

25. The method according to claim 24, wherein the at least one satellite signal and the at least one reference signal are used for positioning.

26. The method according to claim 24 or 25, wherein the first information comprises at least one of the following information: a phase measurement value of each of the at least one satellite signal, a difference between phase measurement values of two of the at least one satellite signal, and a difference between phase measurement values of any one of the at least one satellite signal at two or more moments.

27. The method according to any one of claims 24 to 26, wherein the method further comprises:
   sending a first measurement frequency and/or a second measurement frequency, wherein the first measurement frequency is a frequency of the at least one satellite signal, and the second measurement frequency is a frequency of the at least one reference signal.

28. The method according to any one of claims 24 to 27, wherein the method further comprises:

   receiving configuration information, wherein
   the configuration information comprises at least one of the following information: the first measurement frequency, the second measurement frequency, a reporting period of the first information, and a reporting delay of the first information.

29. The method according to any one of claims 24 to 28, wherein the method further comprises:

   receiving a measurement request and/or a sending request, wherein
   the measurement request is used to request to measure a phase of the at least one received satellite signal; and
   the sending request is used to request to send the at least one reference signal.

30. The method according to any one of claims 24 to 29, wherein the method further comprises:

   sending a positioning protocol message, wherein the positioning protocol message comprises the first information, wherein
   the positioning protocol message is a new radio positioning protocol annex NRPPa message or a long term evolution positioning protocol LPP message.

31. A positioning method, wherein the method comprises:

   receiving first information sent by a first device, second information and fourth information sent by an access network device, and third information sent by a second device; and
   determining a location of the first device based on the first information, the second information, the third information, and the fourth information, wherein
   the first information is a phase measurement value determined by the first device based on at least one first satellite signal, the second information is a phase measurement value determined by the access network device based on at least one first reference signal, the third information is a phase measurement value determined by the second device based on at least one second satellite signal, the fourth information is a phase measurement value determined by the access network device based on at least one second reference signal, the at least one first reference signal is sent by the first device, and the at least one second reference signal is sent by the second device.

32. The method according to claim 31, wherein before the receiving third information and fourth information, the method further comprises:
   determining the second device.

**33.** The method according to claim 31 or 32, wherein the first information comprises at least one of the following information: a phase measurement value of each of the at least one first satellite signal, a difference between phase measurement values of two of the at least one first satellite signal, and a difference between phase measurement values of any one of the at least one first satellite signal at two or more moments;

the second information comprises at least one of the following information: a phase measurement value of each of the at least one first reference signal, a difference between phase measurement values of two of the at least one first reference signal, and a difference between phase measurement values of any one of the at least one first reference signal at two or more moments;

the third information comprises at least one of the following information: a phase measurement value of each of the at least one second satellite signal, a difference between phase measurement values of two of the at least one second satellite signal, and a difference between phase measurement values of any one of the at least one second satellite signal at two or more moments; and

the fourth information comprises at least one of the following information: a phase measurement value of each of the at least one second reference signal, a difference between phase measurement values of two of the at least one second reference signal, and a difference between phase measurement values of any one of the at least one second reference signal at two or more moments.

**34.** The method according to any one of claims 31 to 33, wherein the method further comprises:

receiving a first measurement frequency, a second measurement frequency, a third measurement frequency, and/or a fourth measurement frequency, wherein the first measurement frequency is a frequency of the at least one first satellite signal, the second measurement frequency is a frequency of the at least one first reference signal, the third measurement frequency is a frequency of the at least one second satellite signal, and the fourth measurement frequency is a frequency of the at least one second reference signal.

**35.** The method according to any one of claims 31 to 34, wherein the method further comprises:

sending first configuration information to the first device, wherein

the first configuration information comprises at least one of the following information: the first measurement frequency, the second measurement frequency, a reporting period of the first information, and a reporting delay of the first information.

**36.** The method according to any one of claims 31 to 35, wherein the method further comprises:

sending second configuration information to the second device, wherein

the second configuration information comprises at least one of the following information: the third measurement frequency, the fourth measurement frequency, a reporting period of the third information, and a reporting delay of the third information.

**37.** The method according to any one of claims 31 to 36, wherein the method further comprises:

sending a first measurement request and/or a first sending request to the first device, wherein

the first measurement request is used to request to measure a phase of the at least one received first satellite signal; and

the first sending request is used to request to send the at least one first reference signal.

**38.** The method according to any one of claims 31 to 37, wherein the method further comprises:

sending a second measurement request and/or a second sending request to the second device, wherein

the second measurement request is used to request to measure a phase of the at least one received second satellite signal; and

the second sending request is used to request to send the at least one second reference signal.

**39.** The method according to any one of claims 31 to 38, wherein the receiving third information comprises:

receiving a positioning protocol message, wherein the positioning protocol message comprises the third information, wherein

the positioning protocol message is a new radio positioning protocol annex NRPPa message or a long term evolution positioning protocol LPP message.

40. A positioning apparatus, comprising a processor, wherein the processor is configured to be coupled to a memory, read instructions in the memory, and implement, according to the instructions, the method according to any one of claims 1 to 7, or implement the method according to any one of claims 8 to 16, or implement the method according to any one of claims 17 to 23, or implement the method according to any one of claims 24 to 30, or implement the method according to any one of claims 31 to 39.

41. A computer-readable storage medium having a computer program stored thereon, wherein when the computer program is executed by a processor, the method according to any one of claims 1 to 7 is implemented, or the method according to any one of claims 8 to 16 is implemented, or the method according to any one of claims 17 to 23 is implemented, or the method according to any one of claims 24 to 30 is implemented, or the method according to any one of claims 31 to 39 is implemented.

42. A computer program product, configured to: when the computer program product is executed on a computing device, implement the method according to any one of claims 1 to 7, or implement the method according to any one of claims 8 to 16, or implement the method according to any one of claims 17 to 23, or implement the method according to any one of claims 24 to 30, or implement the method according to any one of claims 31 to 39.

FIG. 1

FIG. 2

FIG. 3

FIG. 4

FIG. 5

First device | Second device | Server

S601: The first device receives at least one first satellite signal and at least one first reference signal

S602: First information and second information

S603: The second device receives at least one second satellite signal and at least one second reference signal

S604: Third information and fourth information

S605: The server determines a location of the first device based on the first information, the second information, the third information, and the fourth information

FIG. 6

$Sat_m$

$Sat_n$

$gNB_j$

$gNB_i$

PRS

Server

First device

Second device

FIG. 7

FIG. 8A

CONT.
FROM
FIG. 8A

CONT.
FROM
FIG. 8A

CONT.
FROM
FIG. 8A

CONT.
FROM
FIG. 8A

S810: The second device receives
at least one second satellite signal

The second device
has a capability of the
access network device

S811': NRPPa message (including third
information and fourth information)

The second device
has a capability of
a terminal

S811": LPP message (including the third
information and the fourth information)

S812: The server determines a
location of the first device
based on the first information,
the second information, the
third information, and the
fourth information

FIG. 8B

First device

Second device

S901: The first device receives at least one first satellite signal and at least one first reference signal

S902: The second device receives at least one second satellite signal and at least one second reference signal

S903: Third information and fourth information

S904: The first device determines a location of the first device based on first information, second information, the third information, and the fourth information

FIG. 9

$Sat_m$

$Sat_n$

$gNB_j$

$gNB_i$

PRS

First device

Second device

FIG. 10

| First device | Second device | Access network device | Server |
|---|---|---|---|

S1101: Positioning request

S1102: First configuration information and/or second configuration information

S1103: Third configuration information and/or fourth configuration information

S1104: First measurement request and/or second measurement request

S1105: Third measurement request and/or fourth measurement request

S1106: At least one first reference signal

S1107: The first device receives at least one first satellite signal

S1108: At least one second reference signal

S1109: The second device receives at least one second satellite signal

TO
FIG. 11B

TO
FIG. 11B

TO
FIG. 11B

TO
FIG. 11B

FIG. 11A

CONT.
FROM
FIG. 11A

CONT.
FROM
FIG. 11A

CONT.
FROM
FIG. 11A

CONT.
FROM
FIG. 11A

The second device has a capability of the access network device

S1110': NRPPa message (including third information and fourth information)

The second device has a capability of a terminal

S1110": LPP message (including the third information and the fourth information)

S1110": LPP message (including the third information and the fourth information)

The second device supports sidelink transmission

S1110''': Sidelink message (including the third information and the fourth information)

S1111: The first device determines a location of the first device based on first information, second information, the third information, and the fourth information

FIG. 11B

46

FIG. 12

FIG. 13

| First device | Second device | Access network device | Server |
|---|---|---|---|

S1401: Determine the second device

S1402: First configuration information

S1403: Second configuration information

S1404: First measurement request and first sending request

S1405: Second measurement request and second sending request

S1406: The first device receives at least one first satellite signal

S1407: The second device receives at least one second satellite signal

S1408: At least one first reference signal

S1409: At least one second reference signal

S1410: LPP message (including first information)

TO
FIG. 14B

TO
FIG. 14B

TO
FIG. 14B

TO
FIG. 14B

FIG. 14A

CONT.
FROM
FIG. 14A

CONT.
FROM
FIG. 14A

CONT.
FROM
FIG. 14A

CONT.
FROM
FIG. 14A

The second device
has a capability of
the access network
device

S1411': NRPPa message
(including third information)

The second device
has a capability of
a terminal

S1411": LPP message
(including the third information)

S1412: Second
information and
fourth information

S1413: The server
determines a location of
the first device based on
the first information, the
second information, the
third information, and the
fourth information

FIG. 14B

Positioning apparatus 1500

Processing unit 1510

Transceiver unit 1520

FIG. 15

Positioning apparatus 1600

Processor 1610

Interface circuit 1620

Memory 1630

FIG. 16

## INTERNATIONAL SEARCH REPORT

| | International application No. |
|---|---|
| | **PCT/CN2022/132261** |

**A. CLASSIFICATION OF SUBJECT MATTER**

H04W 4/024(2018.01)i

According to International Patent Classification (IPC) or to both national classification and IPC

**B. FIELDS SEARCHED**

Minimum documentation searched (classification system followed by classification symbols)

H04W G01S H04L

Documentation searched other than minimum documentation to the extent that such documents are included in the fields searched

Electronic data base consulted during the international search (name of data base and, where practicable, search terms used)

CNPAT, WPI, EPODOC, 3GPP: 参考, 卫星, 信号, 定位, 相位, 测量, 差, SRS, PRS, GNSS, GPS, BDS, position, reference, satellite, signal, phase, measurement+, difference

**C. DOCUMENTS CONSIDERED TO BE RELEVANT**

| Category* | Citation of document, with indication, where appropriate, of the relevant passages | Relevant to claim No. |
|---|---|---|
| X | CN 111343579 A (TELECOMMUNICATIONS TECHNOLOGY RESEARCH INSTITUTE CO., LTD.) 26 June 2020 (2020-06-26) description, paragraphs [0074]-[0085], [0172]-[0183] and [0219]-[0260] | 1-42 |
| A | CN 106842260 A (DALIAN UNIVERSITY OF TECHNOLOGY) 13 June 2017 (2017-06-13) entire document | 1-42 |
| A | CN 112526568 A (DATANG MOBILE COMMUNICATIONS EQUIPMENT CO., LTD.) 19 March 2021 (2021-03-19) entire document | 1-42 |
| A | US 2020408871 A1 (CHINA ACADEMY OF TELECOMMUNICATIONS TECHNOLOGY) 31 December 2020 (2020-12-31) entire document | 1-42 |
| A | CN 113093232 A (SHANGHAI JIAO TONG UNIVERSITY) 09 July 2021 (2021-07-09) entire document | 1-42 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **09 January 2023** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/132261**

| Patent document cited in search report | | | Publication date (day/month/year) | Patent family member(s) | | | Publication date (day/month/year) |
|---|---|---|---|---|---|---|---|
| CN | 111343579 | A | 26 June 2020 | EP | 3902292 | A1 | 27 October 2021 |
| | | | | JP | 2022514430 | A | 10 February 2022 |
| | | | | WO | 2020125310 | A1 | 25 June 2020 |
| | | | | US | 2022043099 | A1 | 10 February 2022 |
| | | | | TW | 202106057 | A | 01 February 2021 |
| | | | | KR | 20210097784 | A | 09 August 2021 |
| CN | 106842260 | A | 13 June 2017 | None | | | |
| CN | 112526568 | A | 19 March 2021 | None | | | |
| US | 2020408871 | A1 | 31 December 2020 | KR | 20200105506 | A | 07 September 2020 |
| | | | | CN | 110062457 | A | 26 July 2019 |
| | | | | EP | 3742829 | A1 | 25 November 2020 |
| | | | | JP | 2021511508 | A | 06 May 2021 |
| | | | | WO | 2019141090 | A1 | 25 July 2019 |
| CN | 113093232 | A | 09 July 2021 | None | | | |

Form PCT/ISA/210 (patent family annex) (January 2015)

**EP 4 436 218 A1**

**REFERENCES CITED IN THE DESCRIPTION**

**Patent documents cited in the description**

- CN 202111576791